# EUROPÄISCHE PATENTSCHRIFT

(11) **EP 3 632 094 B1**
(45) Veröffentlichungstag und Bekanntmachung des Hinweises auf die Patenterteilung: **28.06.2023**
(21) Anmeldenummer: 18728324.7
(22) Anmeldetag: 17.05.2018
(51) Int. Cl.: H04N 5/225, G02B 26/08, G02B 27/64

(54) **MULTIAPERTURABBILDUNGSVORRICHTUNG, ABBILDUNGSSYSTEM UND VERFAHREN ZUM BEREITSTELLEN EINER MULTIAPERTURABBILDUNGSVORRICHTUNG**
MULTI-APERTURE IMAGING DEVICE, IMAGING SYSTEM, AND METHOD FOR PROVIDING A MULTI-APERTURE IMAGING DEVICE
DISPOSITIF DE REPRODUCTION MULTI-OUVERTURE, SYSTÈME DE REPRODUCTION ET PROCÉDÉ DE FOURNITURE D'UN DISPOSITIF DE REPRODUCTION MULTI-OUVERTURE

(30) Priorität: 23.05.2017 DE 102017208709
(43) Veröffentlichungstag der Anmeldung: 08.04.2020
(60) Teilanmeldung: 23175410.2
(73) Patentinhaber: Fraunhofer-Gesellschaft zur Förderung der angewandten Forschung e.V., 80686 München (DE)
(72) Erfinder: WIPPERMANN, Frank, 98617 Meiningen (DE); BRÜCKNER, Andreas, 07743 Jena (DE); DUPARRÉ, Jacques, 07745 Jena (DE); OBERDÖRSTER, Alexander, 07749 Jena (DE)
(74) Vertreter: König, Andreas Rudolf
(86) Internationale Anmeldenummer: PCT/EP2018/062996
(87) Internationale Veröffentlichungsnummer: WO 2018/215311

(56) Entgegenhaltungen:
- WO-A1-2016/033452
- DE-A1-102015 215 837
- DE-A1-102015 215 845
- DE-B3-102014 213 371
- US-A1- 2014 055 624
- US-A1- 2016 360 111
- US-B1- 7 719 749

## Beschreibung

Die vorliegende Erfindung bezieht sich auf eine Multiaperturabbildungsvorrichtung, auf ein Abbildungssystem und auf ein Verfahren zum Bereitstellen einer Multiaperturabbildungsvorrichtung. Die vorliegende Erfindung bezieht sich ferner auf eine Blickrichtungsumschaltung in einer Array-Zeilenkamera mittels elektrisch schaltbarem Spiegel, etwa einem Flüssigkristallspiegel (Liquid Crystal Mirror) und insbesondere auf eine Blickrichtungsumschaltung ohne mechanisch bewegliche Teile.

Konventionelle Kameras besitzen einen Abbildungskanal, der das gesamte Objektfeld abbildet. Multiaperturabbildungsvorrichtungen können das Objektfeld mittels mehrerer Teilgesichtsfelder abbilden. Es existieren Konzepte, die durch Verwendung eines Strahlumlenksystems, etwa eines Spiegels, eine Ablenkung einer Blickrichtung der Kamera-Kanäle aus der Vorrichtungs-Ebene in eine andere Richtung des Gesamtsystems ermöglichen, beispielsweise in etwa senkrecht dazu. Diese senkrechte Richtung kann beispielsweise im Anwendungsfall eines Mobiltelefons in eine Richtung des Gesichts des Benutzers oder in eine Richtung der vor ihm liegenden Umgebung erfolgen und im Wesentlichen mittels schaltbarer Klappspiegel erfolgen.

In DE 10 215 215 845 A1 ist eine Multiaperturabbildungsvorrichtung mit mehreren optischen Kanälen beschrieben.

In US 7,719,749 B1 ist ein Periskop, das zwischen der normalen optischen Ansicht von außen, einer Anzeigeansicht und einer Überlagerungsansicht umgeschaltet werden kann, beschrieben.

In DE 10 2014 213 371 B3 wird eine Vorrichtung zur Erfassung eines Objektbereichs mit einem flachen Gehäuse mit einer ersten Hauptseite, einer zweiten Hauptseite, einer Randseite und einer Multiaperturvorrichtung mit einer Mehrzahl von lateral nebeneinander angeordneten und der Randseite zugewandten optischen Kanälen beschrieben.

Wünschenswert wäre eine Multiaperturabbildungsvorrichtung, ein Abbildungssystem und ein Verfahren zum Bereitstellen einer Multiaperturabbildungsvorrichtung, die ein mechanisch robustes Konzept ermöglichen.

Die Aufgabe der vorliegenden Erfindung besteht deshalb darin, eine Multiaperturabbildungsvorrichtung, ein Abbildungssystem und ein Verfahren zum Bereitstellen einer Multiaperturabbildungsvorrichtung zu schaffen, die eine kompakte und gleichzeitig mechanisch robuste Bauform der Multiaperturabbildungsvorrichtung ermöglichen.

Diese Aufgabe wird durch den Gegenstand den unabhängigen Anspruch 1 gelöst.

Eine Erkenntnis der vorliegenden Erfindung besteht darin, erkannt zu haben, dass obige Aufgabe dadurch gelöst werden kann, indem die Blickrichtungsumschaltung durch ein strahlumlenkendes Element erfolgen kann, das elektrisch ansteuerbar ist und wechselweise einen transparenten Zustand und einen reflektierenden Zustand aufweisen kann, so dass die Umlenkung der Blickrichtung durch eine elektrische Ansteuerung erfolgen kann. Dies ermöglicht die Substitution mechanisch bewegter Strahlumlenkspiegel, was eine hohe mechanische Robustheit unter gleichzeitiger Beibehaltung der kompakten Bauweise ermöglicht.

Gemäß einem Ausführungsbeispiel umfasst eine Multiaperturabbildungsvorrichtung einen Bildsensor, ein Array von optischen Kanälen, wobei jeder optische Kanal eine Optik zur Abbildung zumindest eines Teils eines Gesamtgesichtsfeldes auf einen Bildsensorbereich des Bildsensors umfasst. Die Multiaperturabbildungsvorrichtung umfasst ferner eine Strahlumlenkeinrichtung, umfassend zumindest ein strahlumlenkendes Element mit einer steuerbaren Fläche zum Umlenken eines Strahlengangs eines optischen Kanals, wobei jedem optischen Kanal ein strahlumlenkendes Element zugeordnet ist. Das strahlumlenkende Element ist ausgebildet, um basierend auf einer ersten elektrischen Ansteuerung einen transparenten Zustand der steuerbaren Fläche aufzuweisen und um basierend auf einer zweiten elektrischen Ansteuerung einen reflektierenden Zustand der steuerbaren Fläche aufzuweisen, um den Strahlengang umzulenken. Die steuerbaren Fläche ist eine erste steuerbare Fläche, wobei das Strahlumlenkelement eine zweite steuerbare Fläche aufweist, die in den transparenten Zustand und den reflektierenden Zustand steuerbar sind, wobei die erste und die zweite steuerbare Fläche in einem Winkel von zumindest 10° und höchstens 170° zueinander angeordnet sind. Dies ermöglicht die Kombination zweier Strahlumlenkelemente in einem einzigen Strahlumlenkelement und eine Justierung der Richtungsumlenkungen in dem Strahlumlenkelement. Das Strahlumlenkelement umfasst ein erstes, zweites, drittes und viertes Prisma mit einer dreieckigen Grundfläche. Die erste steuerbare Fläche umfasst ein erstes Flächenelement und ein zweites Flächenelement, wobei die zweite steuerbare Fläche umfassend ein drittes Flächenelement und ein viertes Flächenelement gebildet ist, wobei jedes der ersten bis vierten Flächenelemente an einer Prismenoberfläche eines des ersten bis vierten Prismas angeordnet ist, und die Prismen so angeordnet sind, dass Prismenoberflächen gegenüberliegen und das erste und zweite Flächenelement die erste steuerbare Fläche bilden und das dritte und vierte Flächenelement die zweite steuerbare Fläche bilden. Das erste Flächenelement umfasst einen ersten Schichtstapel, der die Umschaltung zwischen dem transparenten Zustand und dem reflektierenden Zustand bereitstellt, wobei eine Reihenfolge von Schichten in dem ersten Schichtstapel komplementär zu einer Reihenfolge von Schichten in einem zweiten Schichtstapel des zweiten steuerbare Flächenelementes ist. Dies ermöglicht den Erhalt eines Prismenkörpers, dessen Diagonalflächen durch die steuerbaren Flächen des Strahlumlenkelementes gebildet werden. Dies ermöglicht den Erhalt eines Strahlumlenkelementes mit einer hohen optischen Qualität.

Es kann gemäß einem Beispiel alternativ zu der Prismen-Konfiguration auch das Gesamtgesichtsfeld als ein erstes Gesamtgesichtsfeld eingerichtet sein eine erste Optik eines ersten optischen Kanals eine erste Brennweite aufweisen, und eine zweite Optik eines zweiten optischen Kanals eine zweite Brennweite aufweisen, wobei die erste Brennweite von der zweiten Brennweite um zumindest 10 % abweicht und die Multiaperturabbildungsvorrichtung ausgebildet ist, um unter Verwendung des ersten optischen Kanals das erste Gesamtgesichtsfeld und unter Verwendung des zweiten optischen Kanals ein zweites Gesamtgesichtsfeld zu erfassen. Eine erste Gruppe mit zumindest einem optischen Kanal ist umfassend eine Optik mit der ersten Brennweite konfiguriert, um das erste Gesamtgesichtsfeld abzubilden und wobei eine zweite Gruppe mit zumindest einem optischen Kanal umfassend eine Optik mit der zweiten Brennweite konfiguriert ist, um das zweite Gesamtgesichtsfeld abzubilden.

Gemäß einem weiteren Ausführungsbeispiel umfasst die Strahlumlenkeinrichtung zumindest ein Spiegelelement, wobei jedem optischen Kanal ein Spiegelelement zugeordnet ist, das so angeordnet ist, dass die Strahlumlenkeinrichtung in dem transparenten Zustand der steuerbaren Fläche den Strahlengang mit dem Spiegelelement umlenkt. Hierbei kann es sich beispielsweise um den Strahlengang handeln, der das elektrisch ansteuerbare strahlumlenkende Element in dem transparenten Zustand passiert hat und anschließend auf das Spiegelelement trifft. Dies ermöglicht die Umlenkung in zwei beliebig zueinander ausgerichtete Richtungen, beispielsweise 180°, durch Verwendung lediglich eines ansteuerbaren strahlumlenkenden Elementes.

Gemäß einem weiteren Ausführungsbeispiel ist das Strahlumlenkelement ein erstes Strahlumlenkelement, wobei jedem optischen Kanal ein zweites Strahlumlenkelement der Strahlumlenkeinrichtung zugeordnet ist, das so angeordnet ist, dass der Strahlengang des optischen Kanals in dem transparenten Zustand des ersten Strahlumlenkelementes auf das zweite Strahlumlenkelement trifft. Das bedeutet, zwei Strahlumlenkelemente können entlang der Strahlengänge hintereinander geschaltet sein. Dies ermöglicht die Strahlumlenkung entlang zweier Richtungen unter Vermeidung von klassischen Spiegeln und/oder ermöglicht eine Strahlumlenkeinrichtung entlang dreier Richtungen, etwa wenn beide strahlumlenkenden Elemente gleichzeitig den transparenten Zustand aufweisen.

Gemäß einem weiteren Ausführungsbeispiel ist die erste steuerbare Fläche in einer ersten Diagonalfläche eines Strahlumlenkelementkörpers, beispielsweise ein Würfel oder dergleichen, angeordnet und die zweite steuerbare Fläche ist in einer zweiten Diagonalfläche des Strahlumlenkelementkörpers angeordnet. Dies ermöglicht eine Assemblierung des Strahlumlenkelementes durch Einzelkomponenten, deren Außenkanten die Diagonalflächen des Gesamtkörpers bilden.

Gemäß einem Ausführungsbeispiel sind die erste steuerbare Fläche und die zweite steuerbare Fläche um eine Achse, die parallel zu einer Zeilenerstreckungsrichtung des Arrays angeordnet ist, zueinander geneigt angeordnet. Mittels der Neigung der steuerbaren Flächen zueinander kann ein Unterschied in der Blickrichtung durch die Umschaltung der Strahlumlenkelemente eingestellt werden.

Gemäß einem Ausführungsbeispiel weist der Winkel innerhalb eines Toleranzbereichs von 10 % 90° auf. Dies ermöglicht eine Umschaltung in ca. 180° voneinander verschiedene Blickrichtungen.

Gemäß einem Ausführungsbeispiel umfasst das erste Flächenelement einen ersten Schichtstapel, der die Umschaltung zwischen dem transparenten Zustand und dem reflektierenden Zustand bereitstellt. Eine Reihenfolge von Schichten in dem ersten Schichtstapel ist komplementär zu einer Reihenfolge von Schichten in einem zweiten Schichtstapel des zweiten Flächenelementes. Dies ermöglicht eine homogene und gleichmäßige Schichtfolge in der ersten steuerbare Fläche, etwa wenn die Schichten durch das Aneinanderfügen der Prismen eine unterschiedliche Orientierung zueinander aufweisen, etwa um 180° verdreht.

Gemäß einem Ausführungsbeispiel umfasst das Strahlumlenkelement eine steuerbare Fläche, die in den reflektierenden Zustand und den transparenten Zustand steuerbar ist. Die Strahlumlenkeinrichtung umfasst eine Mehrzahl von Strahlumlenkelementen, die entlang einer Zeilenerstreckungsrichtung des Arrays angeordnet sind. Die steuerbaren Flächen der Mehrzahl von Strahlumlenkelementen sind zueinander geneigt in der Strahlumlenkeinrichtung angeordnet, so dass die optischen Kanäle in unterschiedliche Teilgesichtsfelder eines gemeinsamen Gesamtgesichtsfeldes umgelenkt werden. Dies ermöglicht eine großflächige Aufnahme in Form des Gesamtgesichtsfeldes und gleichzeitig eine im Wesentlichen parallele Orientierung der Strahlengänge zwischen dem Bildsensor und der Strahlumlenkeinrichtung, was eine einfache und hochpräzise Fertigung ermöglicht.

Gemäß einem Ausführungsbeispiel umfasst die Strahlumlenkeinrichtung eine Mehrzahl von gleich gebildeten Strahlumlenkelementen entlang einer Zeilenerstreckungsrichtung, entlang der die optischen Kanäle in dem Array angeordnet sind. Die Mehrzahl von Strahlumlenkelementen ist entlang der Zeilenerstreckungsrichtung rotiert zueinander angeordnet. Dies ermöglicht eine Festlegung der Richtungen, in die die optischen Kanäle gelenkt werden, durch eine Festlegung des Rotationswinkels, was einfach möglich ist.

Gemäß einem weiteren Ausführungsbeispiel umfasst die Multiaperturabbildungsvorrichtung eine Fokussiereinrichtung mit zumindest einem Aktor zum Einstellen eines Fokus der Multiaperturabbildungsvorrichtung. Der Aktor ist ausgebildet ist, um eine Relativbewegung zwischen einer der Optiken und dem Bildsensor bereitzustellen. Dies ermöglicht den Erhalt hochqualitativer Bilder durch einen veränderlichen Fokus.

Gemäß einem Ausführungsbeispiel weist eine erste Optik eines ersten optischen Kanals eine erste Brennweite auf und eine zweite Optik eines zweiten optischen Kanals eine zweite Brennweite auf. Die erste Brennweite weicht von der zweiten Brennweite um zumindest 10 % ab. Dies ermöglicht unterschiedliche Öffnungswinkel in den abgebildeten Teil- oder Gesamtgesichtsfeldern.

Gemäß einem Ausführungsbeispiel ist eine erste Gruppe mit zumindest einem optischen Kanal umfassend Optiken mit der ersten Brennweite konfiguriert, um ein erstes Gesamtgesichtsfeld abzubilden. Eine zweite Gruppe mit zumindest einem optischen Kanal umfassend Optiken mit der zweiten Brennweite ist konfiguriert, um ein zweites Gesamtgesichtsfeld abzubilden. Im Zusammenspiel mit unterschiedlichen Brennweiten können somit unterschiedliche Gesamtgesichtsfeldgrößen abgebildet werden.

Gemäß einem Ausführungsbeispiel umfasst eine Multiaperturabbildungsvorrichtung einen für zwei, eine Vielzahl oder alle Strahlengänge der optischen Kanäle gemeinsam wirkenden optischen Bildstabilisator zur optischen Bildstabilisierung entlang einer ersten Bildachse und einer zweiten Bildachse durch Erzeugen einer Relativbewegung zwischen dem Bildsensor und dem Array. Die translatorische Relativbewegung verläuft parallel zu einer ersten Bildachse und einer zweiten Bildachse eines von der Multiaperturabbildungsvorrichtung erfassten Bildes. Dies ermöglicht den Erhalt von Bildern mit einer hohen Qualität durch Verwendung einer optischen Bildstabilisierung.

Gemäß einem Ausführungsbeispiel umfasst die Multiaperturabbildungsvorrichtung einen für zwei, eine Vielzahl oder alle Strahlengänge der optischen Kanäle wirkenden elektronischen Bildstabilisator zur elektronischen Bildstabilisierung entlang einer der Bildachse und der zweiten Bildachse. Der elektronische Bildstabilisator kann alternativ oder zusätzlich zu dem optischen Bildstabilisator angeordnet sein. Beispielsweise können sich Brennweiten der Optiken gewollt oder ungewollt voneinander unterscheiden, so dass die optische Bildstabilisierung in unterschiedlichen optischen Kanälen unterschiedlich wirkt. Diese unterschiedliche Wirkung kann durch zusätzliche Anwendung eines elektronischen Bildstabilisators reduziert oder kompensiert werden. Alternativ ermöglicht die Anwendung eines elektronischen Bildstabilisators eine kanalindividuelle Bildstabilisierung, so dass auf die Verwendung eines optischen Bildstabilisators verzichtet werden kann.

Gemäß einem Ausführungsbeispiel ist der elektronische Bildstabilisator ausgebildet, um eine kanalindividuelle elektronische Bildstabilisierung in jedem Kanal nach einem festgelegten funktionellen Zusammenhang auszuführen, der von einer durch die optische Bildstabilisierung und/oder Fokussierung erhaltene Relativbewegung zwischen dem Bildsensor und dem Array abhängt. Bei Kenntnis der optischen Eigenschaften und/oder der ausgeführten Relativbewegung kann eine Auswirkung in den Abbildungen der optischen Kanäle vorab bekannt sein, was durch den elektronischen Bildstabilisator kompensierbar ist, so dass eine hohe Qualität der Bilder erhalten werden kann.

Gemäß einem Ausführungsbeispiel umfasst eine Multiaperturabbildungsvorrichtung eine Steuereinrichtung zum wechselweisen Ansteuern des strahlumlenkenden Elementes in den transparenten Zustand und in den reflektierenden Zustand basierend auf einer Benutzereingabe.

Gemäß einem weiteren Ausführungsbeispiel umfasst ein Abbildungssystem eine erste und eine zweite Multiaperturabbildungsvorrichtung, die ausgebildet sind, um ein Gesamtgesichtsfeld zumindest teilweise stereoskop zu erfassen.

Gemäß einem weiteren Ausführungsbeispiel umfasst ein Verfahren zum Bereitstellen einer Multiaperturabbildungsvorrichtung ein Bereitstellen eines Bildsensors, ein Bereitstellen eines Arrays von optischen Kanälen, so dass jeder optische Kanal eine Optik zur Abbildung zumindest eines Teils eines Gesamtgesichtsfeldes auf einen Bildsensorbereich des Bildsensors umfasst. Das Verfahren umfasst ein Anordnen einer Strahlumlenkeinrichtung, umfassend zumindest ein strahlumlenkendes Element mit einer steuerbaren Fläche zum Umlenken eines Strahlengangs eines optischen Kanals, so dass jedem optischen Kanal ein strahlumlenkendes Element zugeordnet ist. Das Verfahren wird so ausgeführt, dass das strahlumlenkende Element ausgebildet ist, um basierend auf einer ersten elektrischen Ansteuerung einen transparenten Zustand der steuerbaren Fläche aufzuweisen und um basierend auf einer zweiten elektrischen Ansteuerung einen reflektierenden Zustand der steuerbaren Fläche aufzuweisen, um den Strahlengang umzulenken.

Weiter vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:
- Fig. 1a: eine schematische perspektivische Ansicht einer Multiaperturabbildungsvorrichtung gemäß einem Ausführungsbeispiel;
- Fig. 1b: eine schematische Darstellung eines Gesamtgesichtsfeldes, wie es beispielsweise durch die Multiaperturabbildungsvorrichtung gemäß Fig. 1a erfassbar ist gemäß einem Ausführungsbeispiel;
- Fig. 1c: eine schematische Darstellung des Gesamtgesichtsfeldes aus Fig. 1b, das durch zwei Teilgesichtsfelder vollständig abgebildet und durch vier optische Kanäle stereoskop erfasst wird;
- Fig. 2: eine schematische Seitenschnittansicht eines optischen Kanals einer Multiaperturabbildungsvorrichtung gemäß einem Ausführungsbeispiel, die ein Spiegelelement umfasst;
- Fig. 3: eine schematische Aufsicht auf einen optischen Kanal einer Multiaperturabbildungsvorrichtung gemäß einem weiteren Ausführungsbeispiel, bei der zwei Strahlumlenkelemente dem optischen Kanal zugeordnet sind;
- Fig. 4: eine schematische Aufsicht auf einen optischen Kanal einer Multiaperturabbildungsvorrichtung gemäß einem weiteren Ausführungsbeispiel, bei der das Strahlumlenkelement zwei zueinander geneigte aktive steuerbare Flächen aufweist;
- Fig. 5: eine schematische Seitenschnittansicht einer möglichen Ausgestaltung des Strahlumlenkelementes aus Fig. 4 gemäß einem Ausführungsbeispiel;
- Fig. 6a: eine schematische Seitenschnittansicht von Schichtstapeln umfassend vier Schichten, die Flächenelemente einer steuerbaren Fläche zumindest teilweise bilden, gemäß einem Ausführungsbeispiel;
- Fig. 6b: eine Zusammenfügung der Schichtstapel aus Fig. 6a gemäß einem Ausführungsbeispiel;
- Fig. 7: eine schematische Seitenschnittansicht einer Strahlumlenkeinrichtung gemäß einem Ausführungsbeispiel umfassend zwei Strahlumlenkelemente;
- Fig. 8: eine schematische perspektivische Ansicht einer Multiaperturabbildungsvorrichtung gemäß einem Ausführungsbeispiel, bei der das Array optischer Kanäle drei optische Kanäle umfasst;
- Fig. 9: eine schematische Ansicht zweier Gesamtgesichtsfelder, die mit einer Multiaperturabbildungsvorrichtung gemäß hierin beschriebener Ausführungsbeispiele erfassbar sind;
- Fig. 10: eine schematische perspektivische Ansicht eines Abbildungssystems gemäß einem Ausführungsbeispiel; und
- Fig. 11: ein schematisches Ablaufdiagramm eines Verfahrens zum Bereitstellen einer Multiaperturabbildungsvorrichtung gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

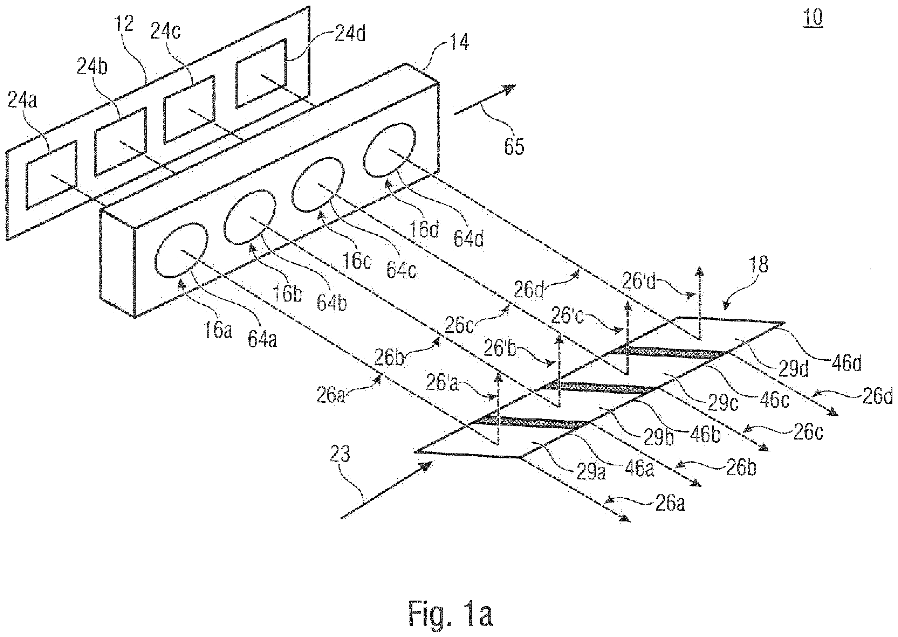

Fig. 1a zeigt eine schematische perspektivische Ansicht einer Multiaperturabbildungsvorrichtung 10 gemäß einem Ausführungsbeispiel. Die Multiaperturabbildungsvorrichtung 10 umfasst einen Bildsensor 12, ein Array 14 von optischen Kanälen 16a bis 16d und eine Strahlumlenkeinrichtung 18. Jeder optische Kanal 16a bis 16d umfasst eine Optik 64a, 64b, 64c bzw. 64d zur Abbildung zumindest eines Teils eines Gesamtgesichtsfeldes auf einen Bildsensorbereich 24a, 24b, 24c bzw. 24d des Bildsensors 12.

Die Strahlumlenkeinrichtung 18 umfasst eine Mehrzahl von Strahlumlenkelementen 46a bis 46d. Jedem optischen Kanal kann ein Strahlumlenkelement 46a bis 46d zugeordnet sein, das bedeutet, dass ein oder mehrere optische Kanäle durch ein strahlumlenkendes Element 46a bis 46d umgelenkt werden können. Die strahlumlenkenden Elemente 46a bis 46d sind ausgebildet, um basierend auf einer elektrischen Ansteuerung 23 einen veränderlichen optischen Zustand aufzuweisen. Hierfür kann jedes strahlumlenkende Element eine steuerbare Fläche 29a-d aufweisen, die basierend auf einer elektrischen Ansteuerung einen transparenten Zustand und/oder einen reflektierenden Zustand aufweist. Ein erster Zustand kann ein im Wesentlichen transparenter Zustand sein, zumindest in dem für die Multiaperturabbildungsvorrichtung relevanten Wellenlängenbereich, etwa dem sichtbaren Licht. Der transparente Zustand kann beispielsweise und zumindest in einem relevanten Blickwinkelbereich von beispielsweise 0° bis 70°, 0° bis 60° oder 0° bis 50° eine photonische Durchlässigkeit von zumindest 50 %, zumindest 70 % oder zumindest 80 % aufweisen. In einem zweiten Zustand kann das strahlumlenkende Element im Wesentlichen reflektierend gebildet sein. Das bedeutet, dass Licht in dem relevanten Wellenlängenbereich und in dem relevanten Blickwinkelbereich in einem Umfang von zumindest 50 %, zumindest 70 % oder zumindest 80 % reflektiert wird. Beispiele für Elemente, die eine derartige Funktionalität aufweisen, sind Spiegel auf Flüssigkristallbasis, wie sie beispielsweise durch KENTOPTRONICS vertrieben werden.

Die Steuerbarkeit in dem reflektierenden oder transmittierenden Zustand ermöglicht nun, dass in dem reflektierenden Zustand Strahlengänge 26a bis 26d der optischen Kanäle 16a bis 16d durch die Strahlumlenkelemente 46a bis 46d umgelenkt werden, wie es durch die Strahlengänge 26a' bis 26'd dargestellt ist. In dem transparenten Zustand können die Strahlengänge 26a bis 26d die strahlumlenkenden Elemente 46a bis 46d im Wesentlichen ungehindert passieren, wobei eine geringe Ablenkung oder Streuung durch Oberflächeneffekte der Strahlumlenkelemente 46a bis 46d möglich sind.

Die Multiaperturabbildungsvorrichtung 10 ermöglicht eine Umschaltung zwischen zwei Blickrichtungen entlang der Strahlengänge 26a bis 26d und 26'a bis 26'd basierend auf der elektrischen Ansteuerung 23. Die elektrische Ansteuerung 23 kann so erfolgen, dass jedes der Strahlumlenkelemente 46a bis 46d individuell steuerbar ist, das bedeutet, es können jeweils einige der optischen Kanäle 16a bis 16d umgelenkt werden und andere optische Kanäle unumgelenkt bleiben. Die Multiaperturabbildungsvorrichtung 10 kann so ausgestaltet sein, dass die Strahlumlenkelemente 46a bis 46d gleichsam, d. h., auf einander abgestimmt während eines gewünschten Wechsels von einem Betriebszustand auf den anderen, ansteuerbar sind bzw. angesteuert werden. Dies bedeutet bspw., dass entweder alle Strahlengänge gleichzeitig abgelenkt (26'a bis 26'd) oder unabgelenkt (26a bis 26d) sind.

Obwohl die Multiaperturabbildungsvorrichtung 10 so dargestellt ist, dass sie vier optische Kanäle aufweist, die ein Gesamtgesichtsfeld auf vier Bildsensorbereiche 24a bis 24d durch Abbilden von Teilgesichtsfeldern abbildet und hierfür eine Strahlumlenkeinrichtung mit vier Strahlumlenkelementen 46a bis 46d aufweist, kann die Multiaperturabbildungsvorrichtung eine beliebige andere Anzahl von optischen Kanälen, etwa zumindest zwei, zumindest drei, zumindest vier, zumindest zehn oder zumindest 20 aufweisen. Die Strahlumlenkeinrichtung 18 kann eine entsprechende oder eine geringere Anzahl von Strahlumlenkelementen zum Umlenken in eine Richtung der Strahlengänge 26'a bis 26'd aufweisen. Alternativ können auch zwei oder mehr optische Kanäle ein gemeinsames Strahlumlenkelement aufweisen, so dass eine geringere Anzahl von Strahlumlenkelementen 46a bis 46d ausreichend sein kann.

Obwohl das Array 14 umfassend eine Zeile entlang der Zeilenerstreckungsrichtung 65 dargestellt ist, kann das Array 14 auch eine höhere Anzahl von Zeilen aufweisen, etwa zumindest zwei, zumindest drei oder mehr.

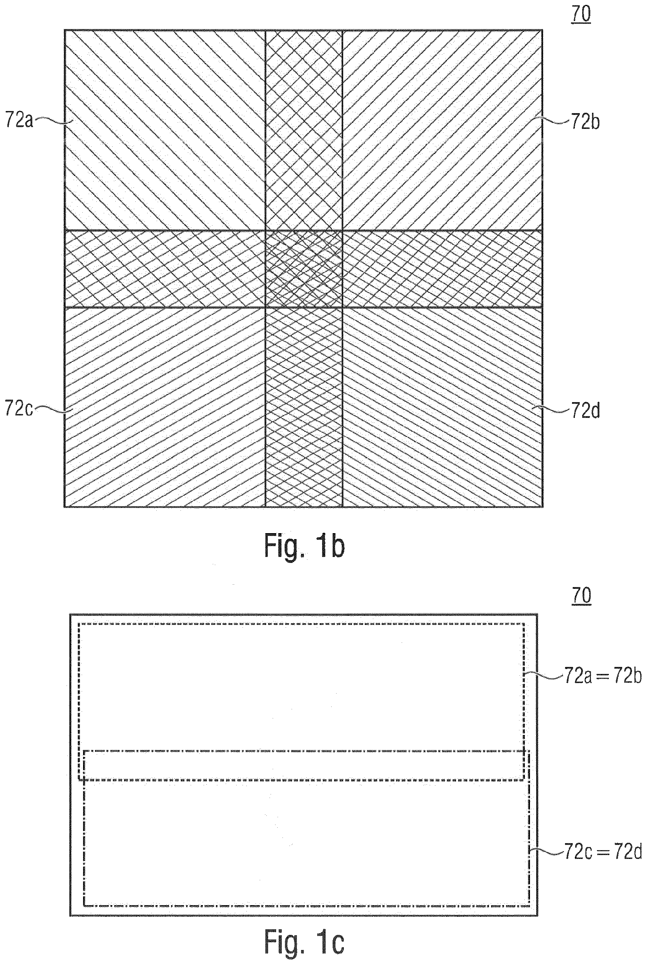

Fig. 1b zeigt eine schematische Darstellung eines Gesamtgesichtsfeldes 70, wie es beispielsweise durch die Multiaperturabbildungsvorrichtung 10 erfassbar ist. Jeder der optischen Kanäle 16a bis 16d kann konfiguriert sein, um ein Teilgesichtsfeld 72a, 72b, 72c oder 72d des Gesamtgesichtsfeldes 70 zu erfassen, wobei die Teilgesichtsfelder 72a bis 72d miteinander überlappen können. Die Anordnung der Teilgesichtsfelder 72a bis 72d ist lediglich beispielhaft zu verstehen und kann beliebig veränderlich sein. Eine unterschiedliche Anzahl von optischen Kanälen 16a bis 16d in der Multiaperturabbildungsvorrichtung 10 kann zu einer unterschiedlichen Anzahl von Teilgesichtsfeldern 72a bis 72d in dem Gesamtgesichtsfeld 70 führen. Alternativ oder zusätzlich ist es ebenfalls möglich, dass die Multiaperturabbildungsvorrichtung 10 optische Kanäle aufweist, die ein Teilgesichtsfeld 72a bis 72d doppelt, das heißt zumindest stereoskop oder auch höherzahlig abbilden. So kann bspw. eine Anzahl von vier optischen Kanälen 16a bis 16d so ausgestaltet sein, dass zwei Teilgesichtsfelder jeweils doppelt zum Erhalt von Stereo-Informationen erfasst werden.

Fig. 1c zeigt eine schematische Darstellung des Gesamtgesichtsfeldes 70, das durch zwei Teilgesichtsfelder, etwa 72a und 72c, 72a und 72d, 72b und 72c oder 72b und 72d vollständig abgebildet wird, wobei jeweils zwei oder alternativ mehr optische Kanäle ausgebildet sind, um ein im Wesentlichen gleiches Teilgesichtsfeld 72a/72b oder 72c/72d zu erfassen. Im Wesentlichen gleich bedeutet hier, dass die Teilgesichtsfelder um zumindest 80 %, zumindest 90 % oder zumindest 95 %, etwa 99 % überlappen, wobei ungeachtet dessen Abweichungen von einander auftreten können, etwa aufgrund von Disparitäten. Die Zuordnung der optischen Kanäle 16a bis 16d der Multiaperturabbildungsvorrichtung 10 zu den Teilgesichtsfeldern 72a bis 72d kann hierbei beliebig sein. Bspw. können die optischen Kanäle 16a und 16c sowie die optischen Kanäle 16b und 16d jeweils dasselbe Teilgesichtsfeld erfassen, was einen gleichen Basisabstand zwischen zwei dasselbe Teilgesichtsfeld erfassenden optischen Kanälen ermöglicht.

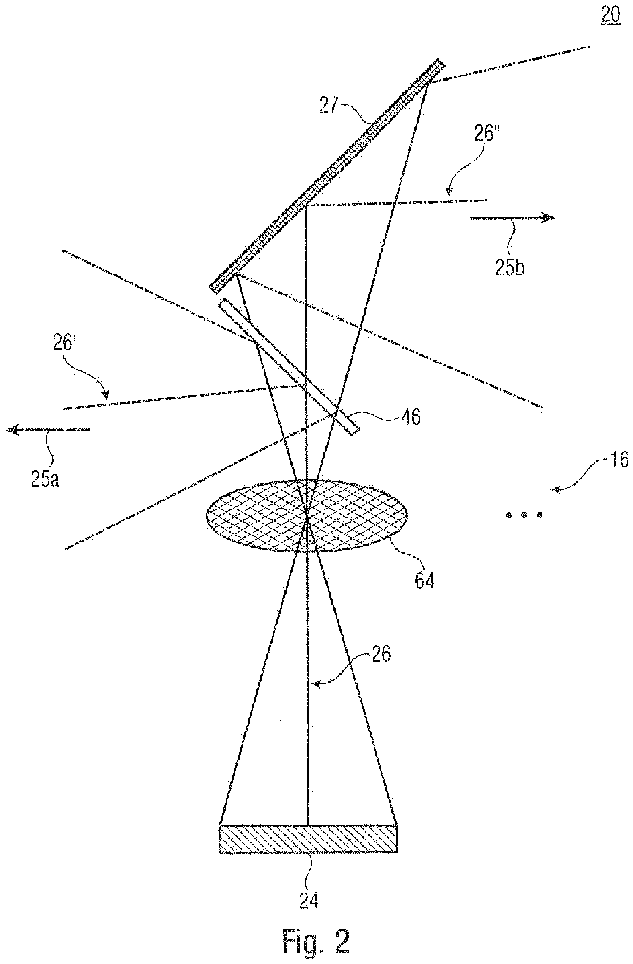

Fig. 2 zeigt eine schematische Seitenschnittansicht eines Teils einer Multiaperturabbildungsvorrichtung 20, insbesondere eines Verlaufs des Strahlengangs 26 eines optischen Kanals 16. Wie es im Zusammenhang mit der Multiaperturabbildungsvorrichtung 10 beschrieben ist, ist die Multiaperturabbildungsvorrichtung 20 ausgebildet, um den Strahlengang 26 in einem reflektierenden Zustand des Strahlumlenkelementes 46 in eine Richtung 25a umzulenken. Die Fig. 2 zeigt hierfür durchgezogene Linien, die Hauptstrahlen an Kanten eines Blickbereichs (Field of View - FOV) sowie in der zentralen Blickrichtung darstellen. Linien in einer Punkt-Strich-Form stellen den umgelenkten Strahlengang 26' sowohl bezüglich der Kanten als auch bezüglich der mittleren Blickrichtung dar, der in die Richtung 25a umgelenkt ist. In dem transparenten Zustand des Strahlumlenkelementes 46 durchläuft oder passiert der Strahlengang 26 das Strahlumlenkelement 46. In einem Verlauf von dem Bildsensorbereich 24 durch die Optik 64 und durch das Strahlumlenkelement 46 hinter dem Strahlumlenkelement 46 ist ein Spiegelelement 27 angeordnet, etwa ein elektrisch passiver und/oder mechanischer Spiegel, der ausgebildet ist, um den Strahlengang 26 in die Richtung 25b umzulenken, um den umgelenkten Strahlengang 26" zu erhalten, dessen Hauptstrahlen an Rändern des Blickbereichs und der mittleren Blickrichtung durch die Form Strich-Punkt-Punkt dargestellt sind. Das Spiegelelement 27 kann beispielsweise unbeweglich, das heißt starr gegenüber einem Substrat oder einer Grundanordnung des optischen Kanals 16 angeordnet sein. Zwar können basierend auf einer später erläuterten Fokussiereinrichtung und/oder einer optischen Bildstabilisierung manche der Komponenten, etwa die Optik 64 und/oder der Bildsensor 12 beweglich sein, um die Abbildung des jeweiligen Teilgesichtsfeldes oder Gesamtgesichtsfeldes zu beeinflussen, jedoch kann das Spiegelelement 27 demgegenüber ortsfest angeordnet sein.

Fig. 2 zeigt lediglich einen optischen Kanal 16, wobei, wie es im Zusammenhang mit der Multiaperturabbildungsvorrichtung 10 beschrieben ist, eine Mehrzahl oder Vielzahl von optischen Kanälen angeordnet sein kann. Die Richtungen 25a und 25b können basierend auf der Ausrichtung des Strahlumlenkelementes 46 und/oder des Spiegelelementes 27 eine beliebige Orientierung zueinander aufweisen, etwa entlang entgegengesetzter Richtungen, etwa 180° zueinander. Jedem optischen Kanal kann ein Spiegelelement 27 zugeordnet sein, wobei auch zwei oder mehrere optische Kanäle mittels eines Spiegelelementes 27 umgelenkt werden können.

In anderen Worten können unterschiedliche Kanäle unterschiedliche Auslenkwinkel des Spiegels und/oder des Strahlumlenkelementes 46 haben, um die Strahlengänge in unterschiedliche Teilgesichtsfelder des Gesamtsgesichtsfeldes zu lenken. Fig. 2 zeigt eine Kombination eines steuerbaren oder schaltbaren und eines klassischen Spiegels für eine Strahlablenkung, beispielsweise entlang einer Gesichtsseite oder einer Weltseite einer Mobiltelefonvorrichtung. Diese Anordnung kann einfach sein, kann jedoch verglichen mit der Multiaperturabbildungsvorrichtung 10 einen größeren Bauraum benötigen.

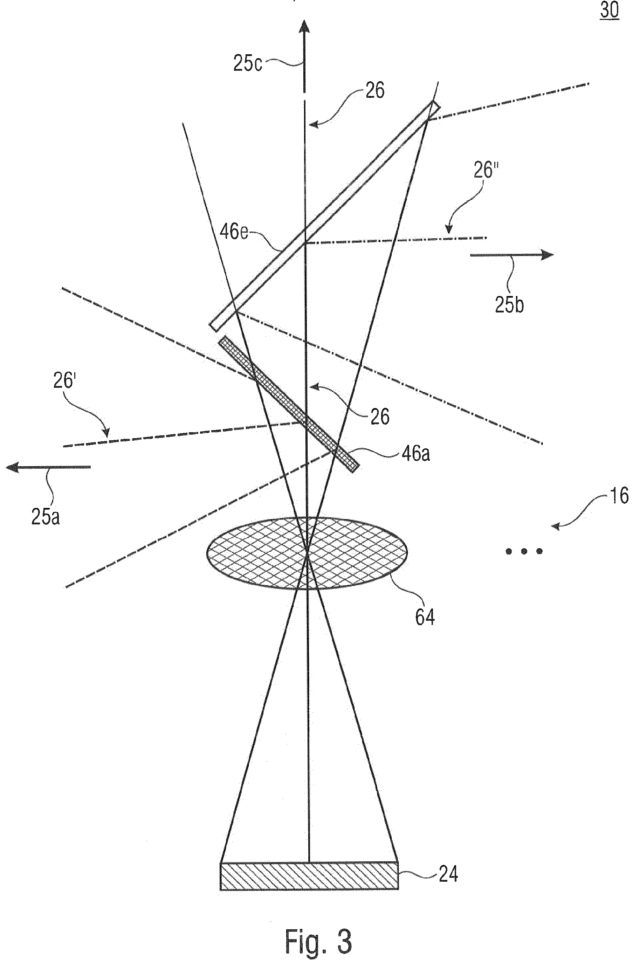

Fig. 3 zeigt eine schematische Aufsicht auf einen Ausschnitt einer Multiaperturabbildungsvorrichtung 30 gemäß einem weiteren Ausführungsbeispiel, bei der zwei Strahlumlenkelemente 46a und 46e dem optischen Kanal 16 zugeordnet sind. Verglichen mit der Multiaperturabbildungsvorrichtung 20 kann das Spiegelelement 27 durch ein weiteres steuerbares Strahlumlenkelement 46e implementiert oder ersetzt sein. Es können somit zwei oder alternativ auch mehrere Strahlumlenkelemente 46a und 46e im Verlauf des Strahlengangs angeordnet sein. Eine Steuerung des Strahlumlenkelementes 46a in den reflektierenden Zustand ermöglicht eine Umlenkung des Strahlengangs 26 in die Blickrichtung 25a. Eine Steuerung des Strahlumlenkelementes 46a in den transparenten Zustand ermöglicht ein Auftreffen des Strahlengangs 26 auf das Strahlumlenkelement 46e und eine optionale Umlenkung des Strahlengangs 26 in die Blickrichtung 25b durch Steuern des Strahlumlenkelementes 46e in den reflektierenden Zustand. Eine derartige Anordnung der Strahlumlenkelemente 46a und 46e sowie ggf. weiterer Strahlumlenkelemente ermöglicht somit sowohl die Umlenkung des Strahlengangs in die Richtung 25b, indem das Strahlumlenkelement 46a in den transparenten Zustand und das Strahlumlenkelement 46e in den reflektierenden Zustand geschaltet wird. Ferner weist die Multiaperturabbildungsvorrichtung 30 eine dritte Blickrichtung 25c auf, etwa eine unveränderte Blickrichtung zwischen der Optik 64 und dem Bildsensorbereich 24, der erhalten werden kann, wenn beide Strahlumlenkelemente 46a und 46e in den transparenten Zustand geschaltet sind. Es können somit drei voneinander örtlich verschiedene Gesamtgesichtsfelder erfasst werden. Die Fig. 3 zeigt lediglich eine schematische Darstellung eines optischen Kanals 16, wobei, wie es im Zusammenhang mit der Multiaperturabbildungsvorrichtung 10 beschrieben ist, eine Mehrzahl oder Vielzahl von optischen Kanälen 16 angeordnet ist. Verglichen mit der Multiaperturabbildungsvorrichtung 20 kann somit eine höherzahlige Anzahl von Blickrichtungen der Multiaperturabbildungsvorrichtung 30 erhalten werden. Die Strahlumlenkelemente 46a und 46e können seriell hintereinander angeordnet sein, so dass das Ansteuern des Strahlumlenkelementes 46a in den transparenten Zustand es ermöglicht, den Strahlengang mit dem Strahlumlenkelement 46e umzulenken oder nicht umzulenken.

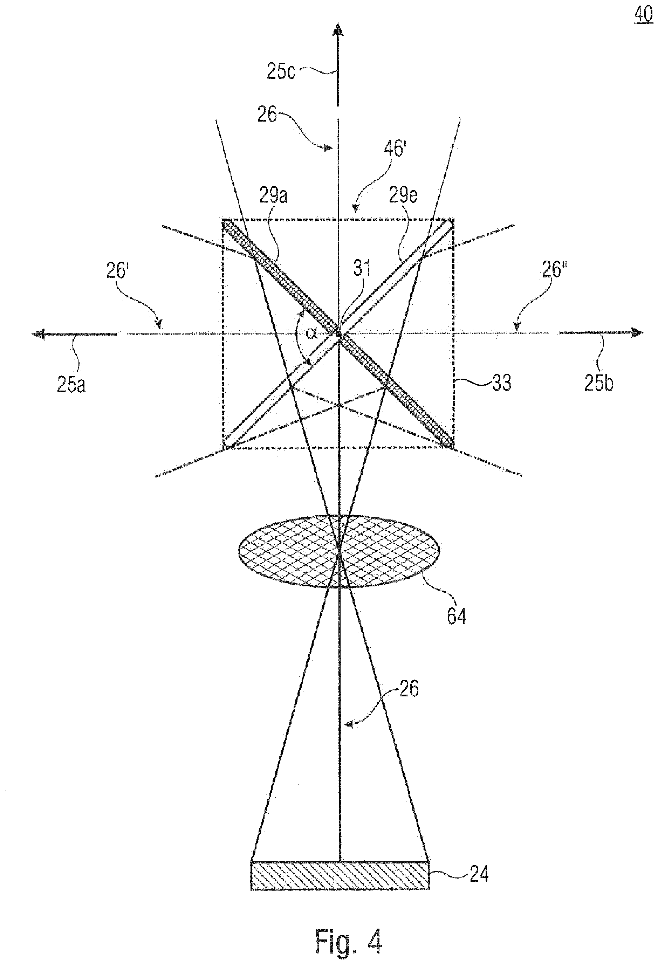

Fig. 4 zeigt eine schematische Aufsicht auf einen Ausschnitt einer Multiaperturabbildungsvorrichtung 40 gemäß einem weiteren Ausführungsbeispiel, bei dem ein Strahlumlenkelement 46' verglichen mit dem Strahlumlenkelement 46 zwei zueinander geneigte aktive steuerbare Flächen 29a und 29b aufweist. Jede der steuerbaren Flächen 29a und 29b ist ausgebildet, um in den transparenten Zustand und den reflektierenden Zustand steuerbar zu sein. Die Ansteuerung kann hierfür unabhängig von der jeweils anderen steuerbare Fläche 29a und 29b erfolgen.

Die steuerbaren Flächen 29a und 29b können um eine Achse 31 mit einem Winkel α zueinander geneigt angeordnet sein. Die Achse 31 kann parallel zu einer Zeilenerstreckungsrichtung 65 der Multiaperturabbildungsvorrichtung 10 angeordnet sein, entlang derer die Optiken der optischen Kanäle 16a bis 16d beispielsweise zu Zeilen in dem Array 14 der Multiaperturabbildungsvorrichtung 10 angeordnet sind. Der Winkel α weist einen beliebigen von zumindest 10° und höchstens 170°, zumindest 30° und höchstens 150° oder zumindest 50° und höchstens 140° auf, etwa 90°. Der Winkel α kann beispielsweise innerhalb eines Toleranzbereichs von 10 %, 8 % oder 5 % 90° betragen. Das Strahlumlenkelement 46' mit den beiden steuerbaren Flächen 29a und 29b kann auch als zwei steuerbare Strahlumlenkelemente gemäß der Multiaperturabbildungsvorrichtung 30 am selben Ort verstanden werden, das bedeutet, anstelle einer seriellen Hintereinanderschaltung kann die Umlenkung an einem gemeinsamen Ort in die Richtung 25a oder 25b erfolgen oder möglicherweise in die Richtung 25c beibehalten werden.

Beispielsweise kann eine Steuereinrichtung konfiguriert sein, um jeweils eine der steuerbaren Flächen 29a oder 29b in den transparenten Zustand und die andere steuerbare Fläche in den reflektierenden Zustand zu steuern.

Wie es durch den gepunkteten Umriss dargestellt ist, kann das Strahlumlenkelement 46' einen Strahlumlenkkörper 33 umfassen, in dem die steuerbare Fläche 29a und eine weitere steuerbare Fläche 29e angeordnet sind. Beispielsweise können die steuerbaren Flächen 29a und 29e Diagonalflächen des Strahlumlenkkörpers 33 sein. Der Strahlumlenckörper 33 kann beispielsweise die Form eines Vierecks, etwa eines Quadrats umfassen oder diese Form aufweisen

Um Reflexionsverluste und/oder Transmissionsverluste zu reduzieren bzw. möglichst zu vermeiden können die steuerbaren Flächen 29a und 29e so gebildet sein, dass sie polarisationsunabhängig sind, wobei sich dies bevorzugt auf beide Betriebszustände, das heißt, den reflektiven Zustand und den transparenten Zustand bezieht. Ferner kann es möglich sein, dass die steuerbaren Flächen eine Mehrzahl von Pixeln aufweisen, die individuell steuerbar sind, so dass alle Pixel den reflektierenden Zustand oder den transparenten Zustand aufweisen können oder alternativ ein Teil der Pixel den transparenten Zustand aufweist und ein Teil der Pixel gleichzeitig den reflektierenden Zustand.

Ein derart ausgebildetes Strahlumlenkelement 46' kann auch als X-Würfel bezeichnet werden, da die steuerbaren Flächen in Form eines X zueinander angeordnet sein können. Dies kann auch als ein eindimensional gekreuzter Spiegel verstanden werden, um die Strahlengänge in die entsprechenden Richtungen abzulenken. Verglichen mit der Multiaperturabbildungsvorrichtung 20 kann dies einen erhöhten Fertigungsaufwand bzw. eine erhöhte Komplexität aufweisen, ermöglicht dafür aber einen geringeren Bauraumbedarf.

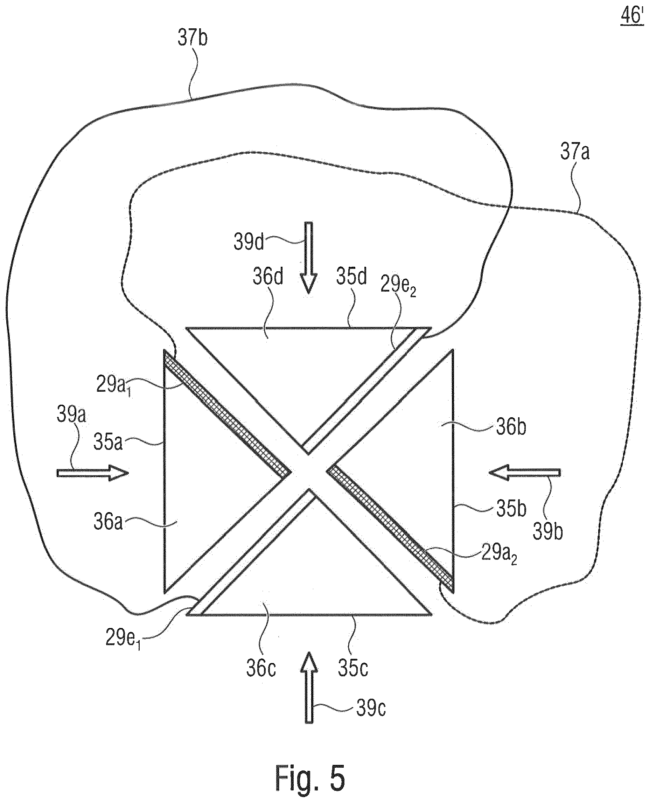

Fig. 5 zeigt eine schematische Seitenschnittansicht einer möglichen Ausgestaltung des Strahlumlenkelementes 46' aus Fig. 4. Die steuerbaren Flächen 29a und 29e aus Fig. 4 sind beispielsweise in zwei oder mehr Flächenelemente 29a₁ und 29a₂ sowie 29e₁ und 29e₂ unterteilt, das bedeutet, die Flächenelemente umfassen oder daraus gebildet sein. Das Strahlumlenkelement 46' umfasst eine Mehrzahl von vier Prismen 35a bis 35d, die zusammengefügt den Strahlumlenkkörper 33 aus Fig. 4 bilden können. Die Prismen 35a bis 35d können beispielsweise eine dreieckige Grundform aufweisen. Alternativ ist auch eine andere Form möglich, beispielsweise wenn der Strahlumlenkkörper 33 eine höherzahlige Polygonform aufweist, beispielsweise ein Hexagon (in das immer noch ein Viereck eingezeichnet werden kann und den obigen Ausführungen entspricht). Jedes der Flächenelemente 29a₁, 29a₂, 29e₁, und 29e₂ kann an einer Seite eines der Prismen 35a bis 35d angeordnet sein. Obwohl Fig. 5 so dargestellt ist, dass jedes Prisma genau ein Flächenelement 29a₁ bis 29e₂ aufweist, können auch mehrere Flächenelemente 29a₁ bis 29e₂ an einem Prisma angeordnet sein. Beispielsweise wäre es vorstellbar, das Flächenelement 29e₁ an dem Prisma 35a anzuordnen, so dass das Flächenelement 29a, an der dargestellten Seite und das Flächenelement 29b₁ an der benachbarten Tangentialfläche angeordnet ist. Das Prisma 35c kann beispielsweise so ausgeführt werden, dass es ohne eine aktive Fläche gebildet ist und beispielsweise als Füllkörper und/oder Grundkörper für die anderen Flächen dient.

Elektrische Verbindungen 37a und 37b können die Flächenelemente 29a₁ und 29a₂ bzw. 29e, und 29e₂ einer steuerbaren Fläche 29a bzw. 29b miteinander verbinden, so dass die Flächenelemente einer steuerbaren Fläche gemeinsam ansteuerbar sind. Durch zeitweises oder permanentes Zusammenfügen der Prismen 35a bis 35d entlang dargestellter Pfeile 39a bis 39d kann der Strahlumlenkkörper 33 erhalten werden. Für das Zusammenfügen kann ein immersives Kleben der Prismen vorteilhaft sein, so dass eine möglichst geringe Anzahl oder bevorzugt keine Luftspalte innerhalb des Strahlumlenkkörpers 33 übrig bleiben, sondern ein monolithisch wirkender Körper erhalten wird.

In anderen Worten kann der X-Würfel (X-Cube) eine Zusammenfügung von Glasprismen mit einem 90°-Winkel sein, die eine geeignete elektrische Verbindung und eine eingebrachte Anordnung aktiver Flächen eines schaltbaren Flüssigkristallspiegels aufweisen. Die Zuweisung der Strahlumlenkung kann somit durch reine elektrische Ansteuerung erhalten werden. Die Prismen sind in einer Seitenschnittansicht dargestellt. Eine Aufsicht kann beispielsweise eine polygonale wie etwa eine viereckige Ansicht darstellen. Die Prismen können oder sollen in einer hohen Genauigkeit zueinander angeordnet werden, um Übergangseffekte zwischen den Flächenelementen zu reduzieren oder zu vermeiden.

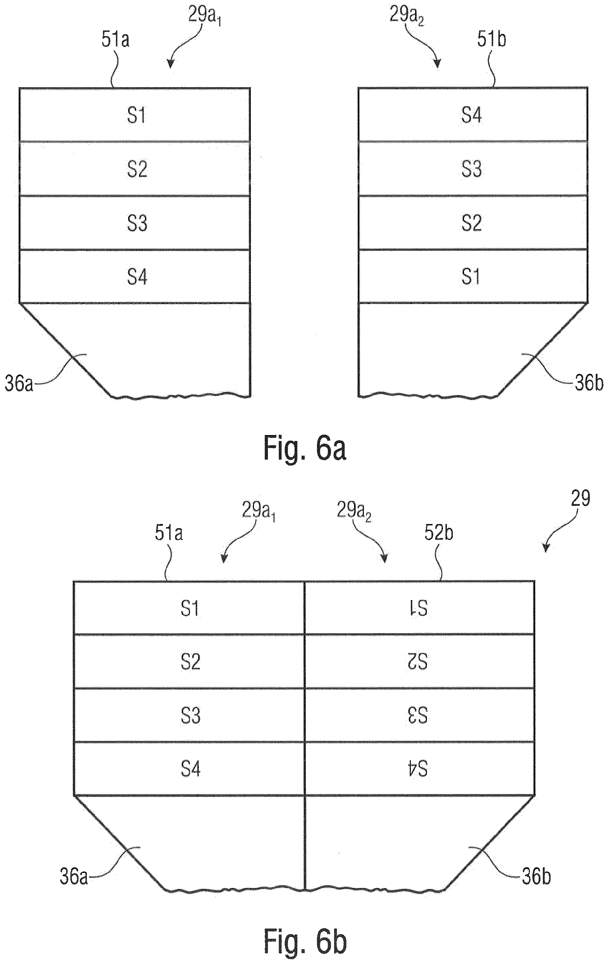

Fig. 6a zeigt eine schematische Seitenschnittansicht eines Schichtstapels 51a umfassend Schichten S1 bis S4, der beispielsweise das Flächenelement 29a₁ zumindest teilweise bildet. Ferner ist ein Schichtstapel 51b dargestellt, der ebenfalls die Schichten S1 bis S4 umfasst und das Flächenelement 29a₂ zumindest teilweise bildet. Eine Reihenfolge von Schichten S1, S2, S3 und S4 ist zwischen den Schichtstapeln 51a und 51b komplementär zueinander, wobei sich dies insbesondere auf die Materialien der Schichten S1 bis S4 beziehen kann. So kann beispielsweise ein transparenter Zustand der Hauptfläche 29a und/oder 29e in beide Richtungen im Wesentlichen transparent sein, durch die für die aktive Fläche 29a und 29e verwendeten Materialien bzw. eine Reihenfolge derselben, jedoch entlang unterschiedlicher Blickrichtungen geringfügig unterschiedlich.

In Fig. 6b ist eine Zusammenfügung der Schichtstapel 51a und 51b gezeigt, wie sie beispielsweise durch das Zusammenfügen der Prismen 35a bis 35d entlang der Pfeile 39a bis 39d in Fig. 5 erhalten werden kann. Wird die Fig. 5 betrachtet, so ist erkennbar, dass eine Abscheidung einer identischen Schichtfolge an Substratkörpern 36a bis 36d, etwa umfassend ein transparentes Material wie transparenten Kunststoff oder Glas, der Prismen 35a und 35b durch die Orientierung der Prismen 35a und 35b zueinander dazu führen kann, dass die in der Fig. 6a dargestellten Schichtfolgen nach einem Zusammenfügen der Prismen 35a und 35b uneinheitlich über einen Schichtverlauf wären. Obwohl dies durchaus im Rahmen der hierin beschriebenen Ausführungsbeispiele liegt, zeigt Fig. 6a eine Möglichkeit, eine einheitliche Eigenschaft entlang der Schichten zu erhalten.

Fig. 6b zeigt die Schichtstapel 51a und 52b in einer Orientierung nach einer Anordnung an den Prismen 35a und 35b und einer gemäß Fig. 5 erfolgten Zusammenfügung derselben. Die Substratkörper 36a und 36b können so aneinandergefügt werden, dass die Schichten S1 bis S4 sowie die Substratkörper 36a und 36b selbst geringe oder keine Einschlüsse oder Fehlstellen aufweisen. Es zeigt sich, dass die Schichten innerhalb der aktiven Fläche 29 über die Flächenelemente 29a₁ und 29a₂ gleichmäßig sein können. Dies ermöglicht den Erhalt einer gleichmäßigen optischen Eigenschaft über den Verlauf der Fläche hinweg. In anderen Worten kann ein Schichtsystem des LC-Spiegels unter angepasst werden, um zu vermeiden, dass das Strahlumlenkelement nur auf einer Seite einen Substratkörper aufweist und auf der anderen arbeitet gegen Luft arbeitet. Die Anpassung ermöglicht beidseitig hohe Brechzahlen des Strahlumlenkelements.

Obwohl sich die Fig. 6a und 6b auf die Zusammenfügung der Flächenelemente 29a, und 29a₂ beziehen, kann dies ohne Einschränkungen auch für die Flächenelemente 29e₁ und 29e₂ erfolgen. Obwohl die Schichtstapel 51a und 51b umfassend vier Schichten S1-S4 beschrieben sind, können die Schichtstapel auch eine von einander verschiedene Anzahl von Schichten aufweisen, etwa 2, 3, 5 oder mehr.

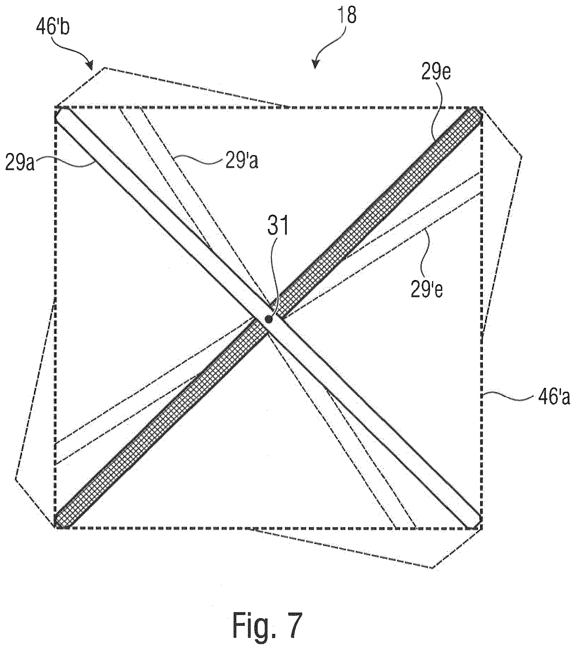

Fig. 7 zeigt eine schematische Seitenschnittansicht der Strahlumlenkeinrichtung 18 umfassend die Strahlumlenkelemente 46'a und 46'b. Die Strahlumlenkelemente 46'a und 46'b können jeweils gemäß den Ausführungen im Zusammenhang mit der Fig. 4 und/oder der Fig. 5 und/oder der Fig. 6 gebildet sein. Gleiche steuerbaren Flächen 29a und 29'a bzw. 29e und 29'e unterschiedlicher Strahlumlenkelemente 46'a und 46'b können zueinander geneigt in der Strahlumlenkeinrichtung 18 angeordnet sein. Die unterschiedliche Neigung ermöglicht eine Ablenkung der optischen Kanäle in unterschiedliche Richtungen und in eine Richtung hin zu unterschiedlichen Teilgesichtsfeldern. Obwohl die unterschiedliche Neigung senkrecht zu der Achse 31 und mithin zu der Zeilenerstreckungsrichtung 65 beschrieben ist, ist es ebenfalls möglich, dass sich die jeweils gleichen Flächen 29a und 29'a bzw. 29e und 29'e auch entlang der Achse 31 zueinander neigen, so dass durch die Strahlumlenkeinrichtung 18 eine zweidimensional unterschiedliche Ablenkung erhalten wird. Wie es durch die gestrichelten Linien dargestellt ist, ist es möglich, dass die Strahlumlenkelemente 46'a und 46'b zueinander um die Achse 31 rotiert angeordnet sind, um die Neigung der steuerbaren Flächen 29a und 29'a bzw. 29e und 29'e zueinander zu erhalten.

In anderen Worten haben unterschiedliche optische Kanäle leicht unterschiedliche Orientierungen und/oder Rotationen der Strahlumlenkkörper 33, um die Strahlengänge in Richtung der angestrebten Teilgesichtsfelder des Gesamtsgesichtsfeldes zu lenken.

Nachfolgend werden nun einige vorteilhafte Weiterbildungen hierin beschriebener Multiaperturabbildungsvorrichtungen erläutert. Insbesondere wird hierbei Bezug genommen auf eine Fokussiereinrichtung zum Fokussieren der Bildaufnahmen, auf eine optische Bildstabilisierung und eine elektronische Bildstabilisierung. Obwohl diese drei Weiterbildungen zusammenhängend im Zusammenhang mit der Multiaperturabbildungsvorrichtung 80 beschrieben werden, wird ferner darauf hingewiesen, dass die Fokussiereinrichtung, der optische Bildstabilisator und der elektronische Bildstabilisator einzeln oder in beliebiger Kombination miteinander realisiert werden können, da jede der beschriebenen Einrichtungen für sich genommen implementierbar ist, um den jeweils modulinhärenten Vorteil zu erhalten.

Die vorangehend erläuterten Elemente zur Strahlumlenkung 27 und/oder 46 und/oder 46' können beliebig mit einander optisch seriell verschaltet werden, das bedeutet, bspw. kann zumindest ein Strahlumlenkelement 46 und/oder 46' an einem oder mehreren Orten mit einem Spiegelelement und/oder einem Strahlumlenkelement 46 kombiniert werden.

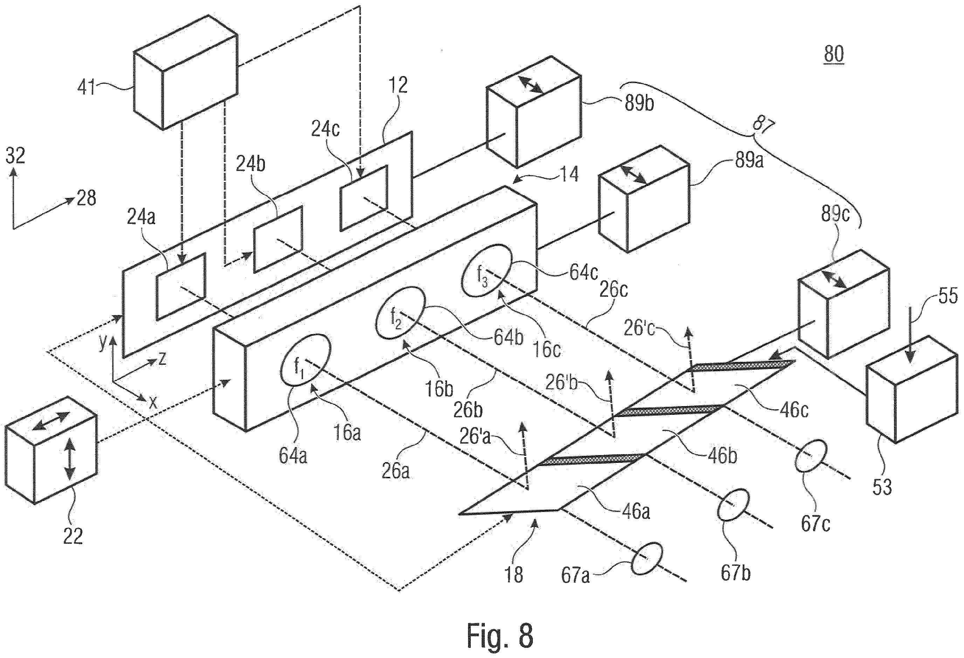

Fig. 8 zeigt eine schematische perspektivische Ansicht einer Multiaperturabbildungsvorrichtung 80, bei der das Array 14 beispielhaft und ohne einschränkende Wirkung drei optische Kanäle 16a, 16b und 16c umfasst. Die Multiaperturabbildungsvorrichtung 80 umfasst eine Fokussiereinrichtung 87, die einen oder mehrere Aktoren 89a, 89b und/oder 89c umfassen kann. Ein erster Aktor 89a bis 89c kann mechanisch mit dem Array 14 oder zumindest einer Optik hieraus, dem Bildsensor 12 und/oder der Strahlumlenkeinrichtung 18 verbunden sein, um eine Relativbewegung entlang einem Verlauf der Strahlengänge zwischen dem Bildsensor 12 und der Strahlumlenkeinrichtung 18 zwischen den Einzelkomponenten zu verändern. Bevorzugt ist die Fokussiereinrichtung 87 ausgebildet, um eine Relativbewegung entlang der mit x beschriebenen Erstreckungsrichtung der Strahlengänge 26a bis 26c zwischen dem Bildsensor 12 und dem Array 14 auszuführen, so dass die Strahlumlenkeinrichtung 18 unbewegt bleiben kann. Durch Verändern eines Abstands zwischen dem Array 14 bzw. der zumindest einen Optik und dem Bildsensor 12 kann ein Fokus der Multiaperturabbildungsvorrichtung 80 eingestellt werden. Das bedeutet, obwohl die Optiken 64a, 64b und 64c so dargestellt sind, dass sie an einem gemeinsamen Träger angeordnet sind, um gemeinsam in dem Array 14 bewegbar zu sein, kann zumindest eine der Optiken 64a-c, alternativ oder zusätzlich zumindest ein Bildsensorbereich 24a-c und/oder zumindest ein Strahlumlenkbereich 46a-c individuell von der Fokussiereinrichtung 97 bewegt werden, um eine Fokussierung für den jeweiligen optischen Kanal einzustellen, so dass auch eine kanalindividuelle Fokussierung möglich ist. Dies kann insbesondere vorteilhaft sein, wenn der Strahlumlenkbereich 46a-c eine Brechkraft oder eine so genannte "optical power", d. h., eine optische Leistung aufweist, d.h. hier auch schon z. B. eine leicht fokussierende Funktion durch z.B. leicht gekrümmte Außenflächen oder verbundene Linsen beinhaltet ist. Unter optischer Leistung wird auch eine dioptrische Leistung (dioptric power), eine Brechleistung (refractive power), eine Fokusleistung (focusing power) oder eine Konvergenzleistung (convergence power) verstanden und beschreibt einen Grad oder Umfang mit welchem eine Linse, ein Spiegel oder ein anderes optisches System Licht konvergiert oder divergiert.

Alternativ oder zusätzlich ist es möglich, dass Gesamtgesichtsfelder und/oder Teilgesichtsfelder die entlang unterschiedlicher Blickrichtungen, bspw. transparente Strahlumlenkelemente 46a-c für eine erste Blickrichtung und reflektierende Strahlumlenkelemente 46a-c für eine zweite Blickrichtung, angeordnet sind, unterschiedlich sind. So kann eine unterschiedliche Größe, ein unterschiedliches Aspektverhältnis zwischen einer Ausdehnung entlang einer ersten Bildrichtung und einer Ausdehnung entlang einer zweiten Blickrichtung und/oder eine veränderte Relativposition der Teilgesichtsfelder in dem jeweiligen Gesamtgesichtsfeld implementiert sein. Bspw. können optische Elemente, etwa Linsen oder Filter angeordnet werden.

Optische Elemente, die zwischen dem Bildsensor und dem strahlumlenkenden Element (bspw. "vor" einer Strahlumlenkung) angeordnet sind, können für mehrere Blickrichtungen gemeinsam wirken, bspw. die Optiken 64a-c. Die Multiaperturabbildungsvorrichtung 80 oder eine andere hierin beschriebene Multiaperturabbildungsvorrichtung kann ein oder mehrere optische Elemente 67a-c umfassen, die "nach" einem Strahlumlenkelement 46a, 46b oder 46c angeordnet sind, so dass im Verlauf des Strahlengangs 26a-c oder 26'a-c das jeweilige Strahlumlenkelement 46a-c zwischen dem optischen Element 67a-c und dem Bildsensor 12 angeordnet ist. Obwohl die optische Elemente 67a-c als kanalindividuelle optische Elemente dargestellt sind, wobei jedem optischen Kanal 16a-c eines der Elemente 67a-c zugeordnet ist, kann zumindest ein optisches Element auch für mehrere optische Kanäle wirken. Alternativ oder zusätzlich kann eine unterschiedliche optische Eigenschaft oder Anzahl der optischen Elemente 67a-c für die unterschiedlichen optischen Kanäle implementiert werden. Obwohl die optischen Elemente entlang des unumgelenkten Strahlengangs 26a-c angeordnet dargestellt sind, können alternativ oder zusätzlich auch optische Elemente entlang zumindest eines umgelenkten Strahlengangs 26'a, 26`b und/oder 26`c angeordnet sein. Bezogen auf die optischen Elemente 67a-c kann entlang einer ersten Blickrichtung der Multiaperturabbildungsvorrichtung 80 der Strahlengang 26a-c von dem optischen Element 67a-c beeinflusst sein und entlang einer zweiten Blickrichtung nicht von dem optischen Element 67a-c beeinflusst sein. Bei den optischen Elementen 67a-c kann es ich bspw. um bevorzugt leichte Zerstreuungslinsen für eine Gesichtsfeldvergrößerung in den jeweiligen Teilen der optischen Pfade handeln, so dass die Teil- und damit auch die Gesamtgesichtsfelder eine unterschiedliche Größe entlang der unterschiedlichen Blickrichtungen aufweisen kann.

Alternativ oder zusätzlich zu den optischen Elementen 67a-c kann es sich um beliebige andere optische Elemente zur Anpassung der Erfassung handeln, etwa Filter oder dergleichen. Ein möglicherweise implementierter Autofokus-Mechanismus kann an die unterschiedlichen optischen Eigenschaften der jeweiligen Blickrichtung angepasst sein und die Funktion entsprechend nachführen oder anpassen.

Alternativ oder zusätzlich zu den vorangehenden Möglichkeiten der Gesamtgesichtsfeldanpassung kann eine Anpassung der Brechkraft auch innerhalb der aktiven Fläche eines oder mehrerer strahlumlenkender Element 46a-c implementiert sein. Das bedeutet, eine Anpassung kann durch eine Blickrichtungsumlenkung mit dem strahlumlenkenden Element erfolgen. Zumindest eines der strahlumlenkenden Elemente 46a-c kann ausgebildet sein, um in dem transparenten Zustand und in dem reflektierenden Zustand eine von einander verschiedene optische Anpassung des durchlaufenden abgelenkten oder unabgelenkten optischen Kanals 16a-c vorzunehmen. Hierfür kann bspw. die steuerbare Fläche des strahlumlenkenden Elements in dem reflektierenden Zustand und in dem transparenten Zustand eine von einander verschiedene Fokussierung oder Defokussierung des optischen Kanals 16a-c oder eine andere optische Funktion bereitstellen. Dies kann bspw. in den im Zusammenhang mit den Fig. 6a und Fig. 6b erläuterten Schichten der steuerbaren Fläche Schichten S1-S4 bzw. deren Substrate umgesetzt werden. Alternativ oder zusätzlich kann die steuerbare Fläche eine Krümmung zur Fokussierung oder Defokussierung aufweisen. Wird das strahlumlenkende Element 46' verwendet, so liegt es im Rahmen erfindungsgemäßer Ausgestaltungen, dass die unterschiedlichen aktiven Flächen 29a und 29e unterschiedliche Änderungen in den optischen Kanälen vornehmen, das bedeutet, die steuerbaren Flächen 29a und 29e können unterschiedlich sein. Durch eine Anpassung entlang einer Blickrichtung und/oder durch unterschiedliche Anpassungen entlang unterschiedlicher Blickrichtungen können weltseitig (Blickrichtung einer Vorrichtung, die von einem Nutzer weg weist) und nutzerseitig (entgegengesetzte Blickrichtung) unterschiedliche Größen des Gesichtsfeldes erhalten werden. Dies kann innerhalb gewisser Grenzen durch unterschiedliche "Optical Powers", d. h., Brechkräfte in den optischen Kanälen oder Spiegeln erhalten werden. In jeweils diesen Richtungen in oder vor den Spiegel- bzw. Umlenkelementen und kann eine Nachführung von Elementen entlang der optischen Achse zur Refokussierung implementiert sein.

Basierend auf Fertigungsungenauigkeiten und/oder basierend auf einer unterschiedlichen Auslegung der Optiken 64a bis 64c können die Optiken 64a bis 64c voneinander verschiedene Brennweiten f₁, f₂ und/oder f₃ aufweisen. Diese unterschiedlichen Brennweiten können dazu führen, dass insbesondere bei einer gemeinsamen Bewegung der Optiken, etwa während einer Fokussierung, die Änderungen in den Abbildungen der Bildsensorbereiche 24a bis 24c unterschiedliche Auswirkungen haben. Dieser Effekt kann ebenfalls auftreten, wenn die Strahlumlenkeinrichtung 18 im Rahmen der Fokussierung relativ zu dem Array 14 und/oder dem Bildsensor 12 bewegt wird. Die Multiaperturabbildungsvorrichtung 80 kann einen optischen Bildstabilisator 22 und/oder einen elektronischen Bildstabilisator 41 aufweisen, um sowohl unterschiedliche Abbildungsmaßstäbe in den Abbildungskanälen als auch eine Verwacklung der Multiaperturabbildungsvorrichtung 80 gegenüber der Szene auszugleichen. Beispielsweise kann der optische Bildstabilisator 22 ausgebildet sein, um für einen einzelnen optischen Kanal, für zumindest zwei optische Kanäle, für eine Vielzahl von optischen Kanälen oder für alle optischen Kanäle 16a bis 16c und mithin deren Strahlengänge gemeinsam zu wirken, indem beispielsweise einzelne Bildsensorbereiche 24a bis 24c, einzelne Optiken 64a bis 64c und/oder einzelne Strahlumlenkbereiche 46a bis 46c relativ zueinander bewegt werden. Es können auch Gruppen von Bildsensorbereichen 24, Optiken 64 und/oder Strahlumlenkbereichen 46 bewegt werden, etwa durch mechanisches Verbinden an einen gemeinsamen Träger. In dieser Weise können auch sämtliche Komponenten des jeweiligen Elementes bewegt werden, das heißt es kann der Bildsensor 12 bewegt werden, um sämtliche Bildsensorbereiche zu bewegen, es kann das Array 14 bewegt werden, um sämtliche Optiken 64 zu bewegen und/oder es kann die Strahlumlenkeinrichtung 18 bewegt werden, um sämtliche Strahlumlenkbereiche 46 zu bewegen. Durch Erzeugen einer translatorischen Relativbewegen zwischen dem Bildsensor 12, dem Array 14 und der Strahlumlenkeinrichtung 18 entlang einer ersten Bildrichtung 28 und einer zweiten Bildrichtung 32, die beispielsweise entlang der Haupterstreckungsrichtungen der Bildsensorbereiche 24a bis 24c verlaufen, kann die optische Bildstabilisierung erhalten werden. Bevorzugt ist der optische Bildstabilisator 22 ausgebildet, um den Bildsensor 12 und das Array 14 relativ zueinander entlang der Bildrichtungen 28 und 32 zu bewegen. Eine einfache Möglichkeit der Umsetzung ist eine Kontaktierung des optischen Bildstabilisators 22 mit dem Array 14, so dass lediglich elektrisch passive Elemente bewegt werden und elektrische Verbindungen in dem Bildsensor 12 ohne Bewegung verbleiben können. Eine Bewegung des Arrays 14 kann in einer y/z-Ebene erfolgen, etwa um eine nichtsdestotrotz mögliche Rotation der Strahlumlenkeinrichtung 18 zur Bildstabilisierung in y zu vermeiden, die aufgrund des Aufbaus und der Dimensionen bzw. Masse der Strahlumlenkeinrichtung 18 bzw. der Multiaperturabbildungsvorrichtung 80 manchmal vermieden werden soll.

Der elektronische Bildstabilisator 41 kann mit dem Bildsensor 12 verbunden sein und ausgebildet sein, um Bildinformationen von den Bildsensorbereichen 24a bis 24c zu erhalten. Der elektronische Bildstabilisator kann ausgebildet sein, um für einen, zwei, eine Vielzahl oder Strahlengänge 26a bis 26c der optischen Kanäle 16a bis 16c zu wirken, indem er die Bildinformationen in den Bildsensorbereichen 24a bis 24c manipuliert. Die elektronische Bildstabilisierung kann ebenfalls entlang der Bildachsen 28 und 32 erfolgen. Bei einer Konfiguration des elektronischen Bildstabilisators 41 derart, dass er für zwei oder mehr Strahlengänge 26a bis 26c wirkt, kann der elektronische Bildstabilisator 41 ausgebildet sein, um die elektronische Bildstabilisierung kanalindividuell für jeden optischen Kanal auszuführen. Der elektronische Bildstabilisator 41 kann ausgebildet sein, um die kanalindividuelle elektronische Bildstabilisierung durch Auswerten eines jeden einzelnen Abbildes in den Bildsensorbereichen 24a bis 24c auszuführen oder um die elektronische Bildstabilisierung derart bereitzustellen, dass ein Abgleich mit einem anderen optischen Kanal bzw. einem anderen Abbild stattfindet. So kann beispielsweise durch den optischen Bildstabilisator 22 eine globale, d. h., für zwei, mehrere oder alle optische Kanäle 16a bis 16c wirksame optische Bildstabilisierung erhalten werden, die allerdings durch die unterschiedlichen Brennweiten f₁ bis f₃ in jedem der optischen Kanäle unterschiedlich wirkt, so dass eine ideale oder größtmögliche optische Bildstabilisierung lediglich in einem der optischen Kanäle 16a bis 16c erhalten wird, während durch die Brennweitenunterschiede Abweichungen von dem Idealwert in den anderen optischen Kanälen erhalten werden. Der elektronische Bildstabilisator 41 kann ausgebildet sein, um die anderen, abweichungsbehafteten optischen Kanäle referenziert auf den in hoher Qualität optisch bildstabilisierten, optischen Kanal elektronisch zu stabilisieren. Der in hoher Qualität optisch bildstabilisierter optische Kanal kann somit als Referenzkanal dienen. Das bedeutet, in dem Referenzkanal kann auf eine elektronische Bildstabilisierung auch verzichtet werden.

Die elektronische Bildstabilisierung in den optischen Kanälen, die von dem Referenzkanal verschieden sind, kann basierend auf einem festgelegten funktionellen Zusammenhang erfolgen. So können die Brennweiten f₁ bis f₃ sowie die von dem optischen Bildstabilisator 22 und/oder anderen Bewegungen herrührenden Effekte in der Multiaperturabbildungsvorrichtung 80 unveränderlich sein, so dass basierend auf einer Bewegung, die etwa durch den optischen Bildstabilisator 22 oder die Fokussiereinrichtung 87 zwischen dem Bildsensor 12, dem Array 14 und der Strahlumlenkeinrichtung 18 erhalten wird, die Auswirkung des funktionellen Zusammenhangs durch die geometrische Anordnung in der Multiaperturabbildungsvorrichtung 80 vorab bekannt ist. Der elektronische Bildstabilisator 41 kann ausgebildet sein, um die kanalindividuelle elektronische Bildstabilisierung in jedem Kanal nach dem festgelegten funktionellen Zusammenhang auszuführen.

Gemäß einem Ausführungsbeispiel umfasst die Multiaperturabbildungsvorrichtung 80 die Fokussiereinrichtung zum kanalindividuellen Einstellen eines Fokus der Multiaperturabbildungsvorrichtung. Der Aktor 89a ist beispielsweise ausgebildet, um eine kanalindividuelle Relativbewegung zwischen den Optiken 64a bis 64c und dem Bildsensor 12 bereitzustellen. Der elektronische Bildstabilisator 41 ist ausgebildet, um für einen, zwei, eine Vielzahl oder alle Strahlengänge 26a-c der optischen Kanäle 16a-c zu wirken und die Bildstabilisierung entlang der Bildachsen 28 und 32 bereitzustellen.

Die Multiaperturabbildungsvorrichtung 80 kann ferner eine Steuereinrichtung 53 aufweisen, die ausgebildet ist, um die Strahlumlenkelemente 46a bis 46c einzeln oder gemeinsam in den transparenten bzw. reflektierenden Zustand zu steuern. Hierfür kann die Steuereinrichtung 53 eine Benutzereingabe 55 erhalten, etwa ein Kommando zum Blickrichtungswechsel.

Im Zusammenhang mit der Multiaperturabbildungsvorrichtung 80 wurde erläutert, dass basierend auf Fertigungsabweichungen Brennweiten von Optiken voneinander verschieden sein können. Alternativ hierzu kann eine Multiaperturabbildungsvorrichtung auch Optiken aufweisen, die eine gewünschte Abweichung in der Brennweite zueinander aufweisen. Als gewünschte Abweichung wird hier eine Abweichung verstanden, bei der eine erste Brennweite einer ersten Optik von einer zweiten Brennweite einer zweiten Optik um zumindest 10 %, zumindest 20 % oder zumindest 30 % abweicht.

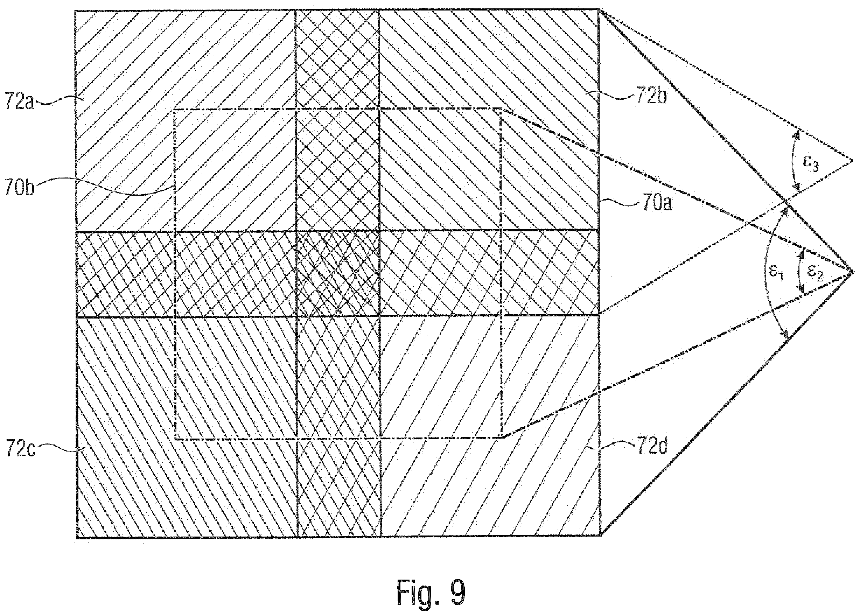

Fig. 9 zeigt eine schematische Ansicht zweier Gesamtgesichtsfelder 70a und 70b, die mit einer Multiaperturabbildungsvorrichtung gemäß hierin beschriebener Ausführungsbeispiele erfassbar sind. Beispielsweise weist eine derartige Multiaperturabbildungsvorrichtung fünf optische Kanäle auf, von denen vier optische Kanäle im Wesentlichen gleich gebildet sind. Derartige optische Kanäle können einen Öffnungswinkel η₃ aufweisen, wobei die so erfassten Einzelbilder zu dem Gesamtgesichtsfeld 70a kombinierbar sind, das insgesamt den Öffnungswinkel η₁ aufweist. Eine fünfte Optik kann nun den oben beschriebenen Unterschied in der Brennweite aufweisen und so gebildet sein, um beispielsweise einen Öffnungswinkel η₂ aufzuweisen, der größer ist als der Öffnungswinkel η₃ und/oder möglicherweise kleiner als der Öffnungswinkel η₁. Der optische Kanal, der den Öffnungswinkel η₂ aufweist kann beispielsweise ausgebildet sein, um das Gesamtgesichtsfeld 70b vollständig abzudecken. Optische Kanäle, die Optiken mit dem Öffnungswinkel η₂ bzw. η₃ aufweisen können zu Gruppen von optischen Kanälen zusammengefasst werden, wobei jede Gruppe zumindest einen optischen Kanal umfasst. Obwohl das Gesamtgesichtsfeld 70b so beschrieben ist, dass es durch einen einzelnen optischen Kanal erfasst wird, ist es gemäß anderen Ausführungsbeispielen ebenfalls möglich, dass das Gesamtgesichtsfeld 70b durch eine Gruppe von zumindest zwei optischen Kanälen erfasst wird.

Das Gesamtgesichtsfeld 70b kann zumindest teilweise oder auch vollständig mit dem Gesamtgesichtsfeld 70a überlappen. Alternativ ist es ebenfalls möglich, dass die Gesamtgesichtsfelder 70a und 70b zumindest teilweise voneinander verschieben sind, etwa wenn die Strahlengänge in voneinander verschiedene Richtungen umgelenkt werden. Das Gesamtgesichtsfeld 70b kann Teil des Gesamtgesichtsfeldes 70a sein, das bedeutet, ein unvollständiger Ausschnitt hiervon. Verglichen mit dem Gesamtgesichtsfeld 70a weist das Gesamtgesichtsfeld 70b bevorzugt einen geringeren Öffnungswinkel auf, was dazu führen kann, dass der abgebildete Ausschnitt des Objektbereichs in dem Gesamtgesichtsfeld 70b verglichen mit dem Gesamtgesichtsfeld 70a kleiner ist. Bei gleichbleibender Sensorfläche bedeutet dies, dass ein größerer Ausschnitt des Objektbereichs auf eine gleichgroße Bildsensorfläche abgebildet wird, wenn dies mit den Teilgesichtsfeldern 72a bis 72d verglichen wird. Das bedeutet, ein Öffnungswinkel η₁ des Gesamtgesichtsfeldes 70a kann größer sein als ein Öffnungswinkel η₂ des Gesamtgesichtsfeldes 70b, wobei die Winkel mit den Brennweiten der Optiken direkt zusammenhängen können. Verglichen mit der Kombination der Optiken zur Erfassung des Gesamtgesichtsfeldes 70a kann die Optik zur Erfassung des Gesamtgesichtsfeldes 70b eine Teleobjektiv oder Zoomobjektiv darstellen oder zumindest eine entsprechende Funktion bereitstellen, während umgekehrt die Kombination der Optiken zur Erfassung des Gesamtgesichtsfeldes 70a verglichen mit der Optik zur Erfassung des Gesamtgesichtsfeldes 70b ein Weitwinkelobjektiv darstellt oder zumindest eine entsprechende Funktion bereitstellen kann.

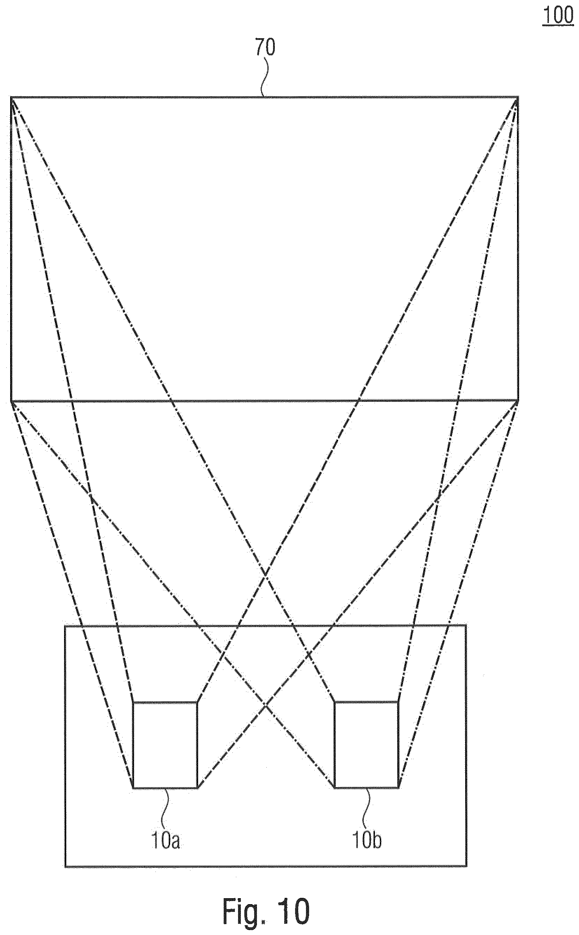

Fig. 10 zeigt eine schematische perspektivische Ansicht eines Abbildungssystems 100, das eine erste Multiaperturabbildungsvorrichtung 10a und eine zweite Multiaperturabbildungsvorrichtung 10b umfasst, die gemeinsam ausgebildet sind, um das Gesamtgesichtsfeld 70 stereoskop zu erfassen. Die Erfassungsbereiche der Multiaperturabbildungsvorrichtung 10a und 10b können vollständig miteinander überlappen, so dass das Gesamtgesichtsfeld 70 vollständig stereoskop erfasst wird. Alternativ können sich die Erfassungsbereiche auch lediglich teilweise überlappen, so dass lediglich in dem Überlappbereich eine stereoskope Erfassung stattfindet. Alternativ kann eine andere hierin beschriebene Multiaperturabbildungsvorrichtung, etwa die Multiaperturabbildungsvorrichtung 20, 30 und/oder 40 anstelle der Multiaperturabbildungsvorrichtung 10a oder 10b angeordnet sein. Obwohl das Abbildungssystem 100 so beschrieben ist, dass es zwei Multiaperturabbildungsvorrichtungen 10a und 10b aufweist, können alternativ auch eine andere Zahl von Multiaperturabbildungsvorrichtungen, etwa drei, vier, fünf oder mehr angeordnet sein.

Das Abbildungssystem 10 kann beispielsweise eine mobile Einrichtung, wie etwa ein Tablet oder ein Mobiltelefon, etwa ein Smartphone, sein. Insbesondere in mobilen Einrichtungen oder Vorrichtungen, etwa Telefonen können bewegliche Teile aus Gründen der Systemstabilität, der Lebensdauer, der mechanischen Schockempfindlichkeit, des Verschlei-ßes oder dergleichen unerwünscht sein. Hierin beschriebene Ausführungsbeispiele ermöglichen es, den Einsatz mechanisch bewegter Teile wenigstens an derartigen Stellen zu minimieren, wo sie durch unbewegliche Teile ersetzt werden können. Je nach Abwägung kann dies sogar unter Kompromittierung anderer Parameter, etwa Komplexität oder Kosten erfolgen, das bedeutet, es kann hinnehmbar sein, ein geringfügig komplexeres System zu erhalten, wenn hierfür bewegliche Teile vermieden werden. Die hierin beschriebenen Ausführungsbeispiele beschreiben eine Anordnung, bei dem anstelle von Klappspiegeln durch eine Anordnung, etwa in Form eines Arrays, von elektrisch schaltbaren Spiegeln substituiert wird. In dem Array können die einzelnen schaltbaren Spiegel untereinander in Rotation zueinander gesetzt sein, um die Unterteilung des Gesichtsfeldes zueinander zu erreichen. Es können sowohl Kombinationen schaltbarer, das heißt Flüssigkristallspiegel (Liquid Crystal) mit normalen (statischen) Spiegeln als auch Anordnungen zweier schaltbarer Flüssigkristallspiegel umgesetzt werden. Zwei schaltbare Flüssigkristallspiegel können beispielsweise auf 90°-Prismen angeordnet sein und eine Kombination derselben kann so erfolgen, dass zwei gekreuzte, 90° zueinander stehende und sich entlang einer Linie schneidende komplementär schaltbare Spiegelflächen entstehen, was auch als X-Cube bezeichnet werden kann.

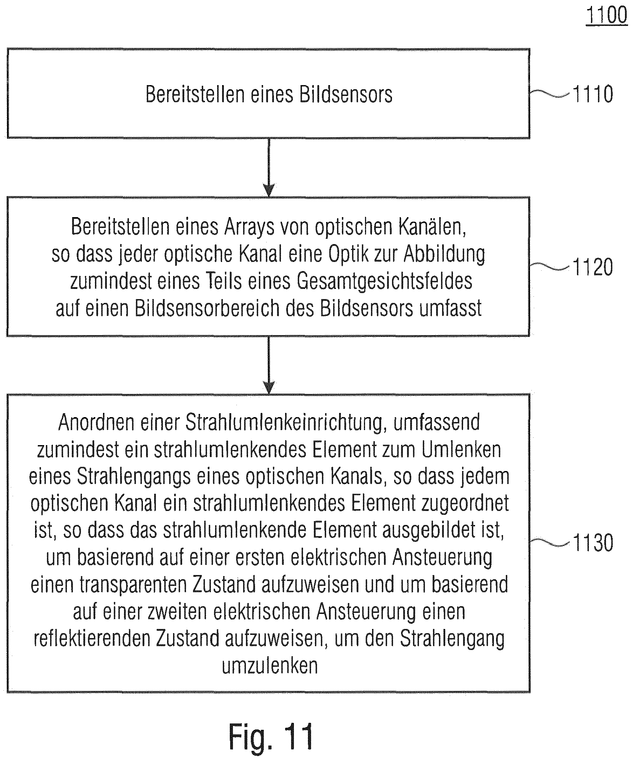

Fig. 11 zeigt ein schematisches Ablaufdiagramm eines Verfahrens 1100 zum Bereitstellen einer Multiaperturabbildungsvorrichtung gemäß einem Ausführungsbeispiel. In einem Schritt 1110 erfolgt ein Bereitstellen eines Bildsensors. In einem Schritt 1120 erfolgt ein Bereitstellen eines Arrays von optischen Kanälen, so dass jeder optische Kanal eine Optik zur Abbildung zumindest eines Teils eines Gesamtgesichtsfeldes auf einen Bildsensorbereich des Bildsensors umfasst. In einem Schritt 1130 erfolgt ein Anordnen einer Strahlumlenkeinrichtung umfassend zumindest ein strahlumlenkendes Element zum Umlenken eines Strahlengangs eines optischen Kanals, so dass jedem optischen Kanal ein strahlumlenkendes Element zugeordnet ist, so dass das strahlumlenkende Element ausgebildet ist, um basierend auf einer ersten elektrischen Ansteuerung einen transparenten Zustand aufzuweisen und um basierend auf einer zweiten elektrischen Ansteuerung einen reflektierenden Zustand aufzuweisen, um den Strahlengang umzulenken.

Die Vorteile der hierin beschriebenen Ausführungsbeispiele liegen unter anderem darin, dass keine extra mechanisch bewegten Teile im Abbildungsstrahlengang für die Umschaltung der Blickrichtung des Kameraarrays zwischen einer Gesichts- und einer Weltseite der mobilen Vorrichtung erforderlich sind. Multiaperturabbildungssysteme oder Multiaperturabbildungsvorrichtungen gemäß hierin beschriebenen Ausführungsbeispielen können eine lineare Kanalanordnung und eine geringe Baugröße aufweisen, ohne mechanisch bewegte Umlenkspiegel für die Umschaltung der Blickrichtung zwischen Gesichts- und Weltseite aufzuweisen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

## Patentansprüche

1. Multiaperturabbildungsvorrichtung (10; 20; 30; 40; 80) mit:
einem Bildsensor (12);
einem Array (14) von optischen Kanälen (16a-d), wobei jeder optische Kanal (16a-d) eine kanalindividuelle Optik (64a-d) zur Abbildung zumindest eines Teils (72a-d) eines Gesamtgesichtsfeldes (70a-b) auf einen eigenen Bildsensorbereich (24a-d) des Bildsensors (12) umfasst;
einer Strahlumlenkeinrichtung (18) zum Umlenken von Strahlengängen der optischen Kanäle, umfassend zumindest ein strahlumlenkendes Element (46a-d; 46'; 46'a-b) mit einer steuerbaren Fläche (29a-d) zum Umlenken eines Strahlengangs (26a-d) eines optischen Kanals (16a-d), wobei jedem optischen Kanal (16a-d) ein strahlumlenkendes Element (46a-d; 46'; 46'a-b) zugeordnet ist, so dass die Strahlengänge (26a-d) von dem jeweiligen Teilgesichtsfeld durch die Strahlumlenkeinrichtung (18) hin zu den Optiken (64a-d) gelenkt werden und von dort auf die Bildsensorbereiche (24a-d) gerichtet sind;
wobei das strahlumlenkende Element (46a-d; 46'; 46'a-b) ausgebildet ist, um basierend auf einer ersten elektrischen Ansteuerung (23) einen transparenten Zustand der steuerbaren Fläche (29a-d) aufzuweisen und um basierend auf einer zweiten elektrischen Ansteuerung (23) einen reflektierenden Zustand der steuerbaren Fläche (29a-d) aufzuweisen, um den Strahlengang (26a-d) umzulenken; **dadurch gekennzeichnet, dass**
die steuerbare Fläche (29a-d) eine erste steuerbare Fläche (29a) ist, wobei das Strahlumlenkelement eine zweite steuerbare Fläche (29e) aufweist, die in den transparenten Zustand und den reflektierenden Zustand steuerbar sind, wobei die erste und die zweite steuerbare Fläche (29a, 29e) in einem Winkel (α) von zumindest 10° und höchstens 170° zueinander angeordnet sind;
wobei das Strahlumlenkelement (46') ein erstes, zweites, drittes und viertes Prisma (35a-d) mit einer dreieckigen Grundfläche umfasst, bei der die erste steuerbare Fläche (29a) umfassend ein erstes Flächenelement (29a₁) und ein zweites Flächenelement (29a₂) gebildet ist, wobei die zweite steuerbare Fläche (29e) umfassend ein drittes Flächenelement (29e₁) und ein viertes Flächenelement (29e₂) gebildet ist, wobei jedes der ersten bis vierten Flächenelemente (29a₁, 29a₂, 29e₁, 29e₂) an einer Prismenoberfläche eines des ersten bis vierten Prismas (35a-d) angeordnet ist, und die Prismen (35a-d) so angeordnet sind, dass Prismenoberflächen gegenüberliegen und das erste und zweite Flächenelement (29a₁, 29a₂) die erste steuerbare Fläche (29a) bilden und das dritte und vierte Flächenelement (29e₁, 29e₂) die zweite steuerbare Fläche (29e) bilden;
wobei das erste Flächenelement (29a₁) einen ersten Schichtstapel (51a) umfasst, der die Umschaltung zwischen dem transparenten Zustand und dem reflektierenden Zustand bereitstellt, wobei eine Reihenfolge von Schichten (S1-S4) in dem ersten Schichtstapel (51a) komplementär zu einer Reihenfolge von Schichten (S1-S4) in einem zweiten Schichtstapel (51b) des zweiten steuerbare Flächenelementes (29a₂) ist.

2. Multiaperturabbildungsvorrichtung gemäß Anspruch 1, bei der die Strahlumlenkeinrichtung (18) zumindest ein Spiegelelement (27) umfasst, wobei jedem optischen Kanal (16a-d) ein Spiegelelement (27) zugeordnet ist, das so angeordnet ist, dass die steuerbare Fläche (29) zwischen der Optik (64a-d) und dem Spiegelelement (27) angeordnet ist und die Strahlumlenkeinrichtung (18) in dem transparenten Zustand der steuerbaren Fläche (29a-d) den Strahlengang (26a-d) mit dem Spiegelelement (27) umlenkt.

3. Multiaperturabbildungsvorrichtung gemäß Anspruch 1 oder 2, wobei die Strahlumlenkeinrichtung (18) eine Mehrzahl von Strahlumlenkelementen (46a-d; 46'a-b) umfasst, die entlang einer Zeilenerstreckungsrichtung (65) des Arrays angeordnet sind, wobei die steuerbaren Flächen (29a, 29'a, 29e, 29'e) der Mehrzahl von Strahlumlenkelementen (46a-d; 46'a-b) zueinander geneigt in der Strahlumlenkeinrichtung (18) angeordnet sind, so dass die optischen Kanäle (16a-d) in unterschiedliche Teilgesichtsfelder (72a-d) eines gemeinsamen Gesamtgesichtsfeldes (70)umgelenkt werden.

4. Multiaperturabbildungsvorrichtung gemäß einem der vorangehenden Ansprüche, bei der die Strahlumlenkeinrichtung (18) eine Mehrzahl von gleich gebildeten Strahlumlenkelementen (46a-d; 46'a-b) entlang einer Zeilenerstreckungsrichtung (65), entlang der die optischen Kanäle (16a-d) in dem Array (14) angeordnet sind, aufweist, wobei die Mehrzahl von Strahlumlenkelementen (46a-d; 46'a-b) entlang der Zeilenerstreckungsrichtung (65) rotiert zueinander angeordnet ist.

5. Multiaperturabbildungsvorrichtung gemäß einem der vorangehenden Ansprüche, bei der das Gesamtgesichtsfeld ein erstes Gesamtgesichtsfeld ist und bei der eine erste Optik (64a-d) eines ersten optischen Kanals (16a-d) eine erste Brennweite (f₁, f₂, f₃) aufweist, und bei der eine zweite Optik (64a-d) eines zweiten optischen Kanals (16a-d) eine zweite Brennweite (f₁, f₂, f₃) aufweist, wobei die erste Brennweite von der zweiten Brennweite um zumindest 10 % abweicht und die Multiaperturabbildungsvorrichtung ausgebildet ist, um unter Verwendung des ersten optischen Kanals das erste Gesamtgesichtsfeld und unter Verwendung des zweiten optischen Kanals ein zweites Gesamtgesichtsfeld zu erfassen.

6. Multiaperturabbildungsvorrichtung gemäß Anspruch 5, bei der eine erste Gruppe mit zumindest einem optischen Kanal (16a-d) umfassend eine Optik (64a-d) mit der ersten Brennweite (f₁, f₂, f₃) konfiguriert ist, um das erste Gesamtgesichtsfeld (70a) abzubilden und wobei eine zweite Gruppe mit zumindest einem optischen Kanal (16a-d) umfassend eine Optik mit der zweiten Brennweite (f₁, f₂, f₃) konfiguriert ist, um das zweite Gesamtgesichtsfeld (70b) abzubilden.

7. Multiaperturabbildungsvorrichtung gemäß einem der vorangehenden Ansprüche, bei der das strahlumlenkende Element (46a-d; 46'; 46'a-b) ausgebildet ist, um in dem transparenten Zustand und in dem reflektierenden Zustand eine von einander verschiedene optische Anpassung des optischen Kanals (16a-d) vorzunehmen;
wobei das strahlumlenkende Element (46a-d; 46'; 46'a-b) eine erste steuerbare Fläche (29a) und eine zweite steuerbare Fläche (29e) aufweist, die ausgebildet sind, um von einander verschiedene unterschiedliche Änderungen in einem optischen Kanal vornehmen, um durch unterschiedliche Brechkräfte eine von einander verschiedene Fokussierung oder Defokussierung des optischen Kanals (16a-d) bereitzustellen.

8. Multiaperturabbildungsvorrichtung gemäß einem der vorangehenden Ansprüche, ferner umfassend einen für einen, zwei, eine Vielzahl oder alle Strahlengänge (26a-d) der optischen Kanäle (16a-d) gemeinsam wirkenden optischen Bildstabilisator (22) zur optischen Bildstabilisierung entlang einer ersten Bildachse (28) und einer zweiten Bildachse (32) durch Erzeugen einer translatorischen Relativbewegung zwischen dem Bildsensor (12) und dem Array (14), wobei die translatorische Relativbewegung parallel zu einer ersten Bildachse (28) und einer zweiten Bildachse (32) eines von der Multiaperturabbildungsvorrichtung erfassten Bildes verläuft.

9. Multiaperturabbildungsvorrichtung gemäß einem der vorangehenden Ansprüche, ferner umfassend einen für einen, zwei, eine Vielzahl oder alle Strahlengänge (26a-d) der optischen Kanäle (16a-d) wirkenden elektronischen Bildstabilisator (41) zur elektronischen Bildstabilisierung entlang einer ersten Bildachse (28) und einer zweiten Bildachse (32).

10. Multiaperturabbildungsvorrichtung gemäß Anspruch 9, bei der der elektronische Bildstabilisator (41) ausgebildet ist, um eine Bildstabilisierung kanalindividuell für jeden optischen Kanal (16a-d) auszuführen.

11. Multiaperturabbildungsvorrichtung gemäß Anspruch 10, bei der der elektronische Bildstabilisator (41) ausgebildet ist, um ein Abbild eines optischen Kanals (16a-d) bezogen auf ein optisch stabilisiertes Referenzabbild in einem anderen optischen Kanal (16a-d) zu stabilisieren.

12. Multiaperturabbildungsvorrichtung gemäß Anspruch 9 bis 11, bei der der elektronische Bildstabilisator (41) ausgebildet ist, um die kanalindividuelle elektronische Bildstabilisierung in jedem Kanal (16a-d) nach einem festgelegten funktionellen Zusammenhang auszuführen, der von einer durch eine Relativbewegungen zwischen dem Bildsensor (12), dem Array (14) und der Strahlumlenkeinrichtung (18) abhängt.

13. Multiaperturabbildungsvorrichtung gemäß einem der vorangehenden Ansprüche, ferner mit:
einer Fokussiereinrichtung (87) umfassend zumindest einen Aktor (89a-c) zum kanalindividuellen Einstellen eines Fokus der Multiaperturabbildungsvorrichtung, wobei der Aktor (89a-c) ausgebildet ist, um eine kanalindividuelle Relativbewegung zwischen den Optiken (64a-d) und dem Bildsensor (12) bereitzustellen;
einem für einen, zwei, eine Vielzahl oder alle Strahlengänge (26a-d) der optischen Kanäle (16a-d) wirkenden elektronischen Bildstabilisator (41) zur Bildstabilisierung entlang einer ersten Bildachse (28) und einer zweiten Bildachse (32).

14. Multiaperturabbildungsvorrichtung (10; 20; 30; 40; 80) gemäß einem der vorangehenden Ansprüche, die ausgebildet ist, um ein Gesamtgesichtsfeld (70) zumindest teilweise stereoskop zu erfassen.

## Claims

1. Multi-aperture imaging device (10; 20; 30; 40; 80), comprising:
an image sensor (12);
an array (14) of optical channels (16a-d), wherein each optical channel (16a-d) includes a channel-individual optic (64a-d) for imaging at least a part (72a-d) of a total field of view (70a-b) onto a proprietary image sensor region (24a-d) of the image sensor (12);
a beam-deflecting means (18) for deflecting optical paths of the optical channels including at least one beam-deflecting element (46a-d; 46'; 46'a-b) with a controllable surface (29a-d) for deflecting an optical path (26a-d) of an optical channel (16a-d), wherein each optical channel (16a-d) is assigned a beam-deflecting element (46a-d; 46'; 46'a-b) so that, by means of the by the beam-deflecting means (18), the optical paths (26a-d) are deflected from the respective partial field of view toward the optics (64a-d) and, from there, are directed onto the image sensor regions (24a-d);
wherein the beam-deflecting element (46a-d; 46'; 46'a-b) is configured to comprise a transparent state of the controllable surface (29a-d) based on a first electric control (23) and comprise a reflecting state of the controllable surface (29a-d) based on a second electric control (23) in order to deflect the optical path (26a-d); **characterized in that**
the controllable surface (29a-d) is a first controllable surface (29a), wherein the beam-deflecting element comprises a second controllable surface (29e) that is controllable into the transparent state and the reflecting state, wherein the first and the second controllable surfaces (29a, 29e) are arranged at an angle (α) of at least 10° and at most 170° towards each other;
wherein the beam-deflecting element (46') includes a first, a second, a third and a fourth prism (35a-d) having a triangular basal shape, wherein the first controllable surface (29a) is formed including a first surface element (29a₁) and a second surface element (29a₂), wherein the second controllable surface (29e) is formed including a third surface element (29e₁) and a fourth surface element (29e₂), wherein each of the first to fourth surface elements (29a₁, 29a₂, 29e₁, 29e₂) is arranged at a prism surface of one of the first to fourth prisms (35a-d) and the prisms (35a-d) are arranged such that prism surfaces oppose each other and the first and the second surface elements (29a₁, 29a₂) form the first controllable surface (29a) and the third and the fourth surface elements (29e₁, 29e₂) form the second controllable surface (29e);
wherein the first surface element (29a₁) includes a first layer stack (51a) which provides switching between the transparent state and the reflecting state, wherein an order of layers (S1-S4) in the first layer stack (51a) is complimentary to an order of layers (S1-S4) in a second layer stack (51b) of the second controllable surface element (29a₂).

2. Multi-aperture imaging device according to claim 1, wherein the beam-deflecting means (18) includes at least one mirror element (27), wherein each optical channel (16a-d) is assigned a mirror element (27) arranged such that the controllable surface (29) is arranged between the optic (64a-d) and the mirror element (27) and such that the beam-deflecting means (18) deflects the optical path (26a-d) with the mirror element (27) in the transparent state of the controllable surface (29a-d).

3. Multi-aperture imaging device according to claim 1 or 2, wherein the beam-deflecting means (18) includes a plurality of beam-deflecting elements (46a-d; 46'a-b) arranged along a line-extension direction (65) of the array, wherein the controllable surfaces (29a, 29'a, 29e, 29'e) of the plurality of beam-deflecting elements (46a-d; 46'a-b) are arranged in an inclined manner towards each other in the beam-deflecting means (18) so that the optical channel (16a-d) are deflected into different partial fields of view (72a-d) of a mutual total field of view (70).

4. Multi-aperture imaging device according to any one of the preceding claims, wherein the beam-deflecting means (18) includes a plurality of identically formed beam-deflecting elements (46a-d; 46'a-b) along a line-extension direction (65) along which the optical channels (16a-d) are arranged in the array (14), wherein the plurality of beam-deflecting elements (46a-d; 46'a-b) are arranged along the line-extension direction (65) in a rotated manner towards each other.

5. Multi-aperture imaging device according to any one of the preceding claims, wherein the total field of view is a first total field of view, wherein a first optic (64a-d) of a first optical channel (16a-d) comprises a first focal length (f₁, f₂, f₃), and wherein a second optic (64a-d) of a second optical channel (16a-d) comprises a second focal length (f₁, f₂, f₃), wherein the first focal length deviates from the second focal length by at least 10%, and the multi-aperture imaging device is configured to capture the first total field of view by using the first optical channel and to capture the a second total field of view by using the second optical channel.

6. Multi-aperture imaging device according to claim 5, wherein a first group with at least one optical channel (16a-d) including an optic (64a-d) with the first focal length (f₁, f₂, f₃) is configured to image the first total field of view (70a), and wherein a second group with at least one optical channel (16a-d) including an optic having the second focal length (f₁, f₂, f₃) is configured to image the second total field of view (70b).

7. Multi-aperture imaging device according to any one of the preceding claims, wherein the beam-deflecting element (46a-d; 46'; 46'a-b) is configured to carry out a different optical adjustment of the optical channels (16a-d) in the transparent state and in the reflecting state;
wherein the beam-deflecting element (46a-d; 46; 46'a-b) comprises a first controllable surface (29a) and a second controllable surface (29'e) configured to carry out different changes in an optical channel so as to provide a different focusing or defocusing of the optical channel (16a-d) by different refraction powers.

8. Multi-aperture imaging device according to any one of the preceding claims, further including an optical image stabilizer (22) acting together for one, two, a multitude of or all optical paths (26a-d) of the optical channels (16a-d) for an optical image stabilization along a first image axis (28) and a second image axis (32) by generating a translational relative movement between the image sensor (12) and the array (14), wherein the translational relative movement runs in parallel to a first image axis (28) and a second image axis (32) of an image captured by the multi-aperture imaging device.

9. Multi-aperture imaging device according to any one of the preceding claims, further including an electronic image stabilizer (41) acting for one, two, a multitude of or all optical paths (26a-d) of the optical channels (16a-d) for an electronic image stabilization along a first image axis (28) and a second image axis (32).

10. Multi-aperture imaging device according to claim 9, wherein the electronic image stabilizer (41) is configured to execute an image stabilization in a channel-individual manner for each optical channel (16a-d).

11. Multi-aperture imaging device according to claim 10, wherein the electronic image stabilizer (41) is configured to stabilize an image of an optical channel (16a-d) with respect to an optically stabilized reference image in another optical channel (16a-d).

12. Multi-aperture imaging device according to claims 9 to 11, wherein the electronic image stabilizer (41) is configured to execute the channel-individual electronic image stabilization in each channel (16a-d) according to a set functional correlation depending on a relative movement between the image sensor (12), the array (14) and the beam-deflecting means (18).

13. Multi-aperture imaging device according to any one of the preceding claims, further comprising:
a focusing means (87) including at least one actuator (89a-c) for channel-individually setting a focus of multi-aperture imaging device, wherein the actuator (89a-c) is configured to provide a channel-individual relative movement between the optics (64a-d) and the image sensor (12);
an electronic image stabilizer (41) acting for one, two, a multitude of or all optical paths (26a-d) of the optical channels (16a-d) for an image stabilization along a first image axis (28) and a second image axis (32).

14. Multi-aperture imaging device (10; 20; 30; 40; 80) according to any one of the preceding claims, configured to detect a total field of view (70) at least partially in a stereoscopic manner.

## Revendications

1. Dispositif de reproduction multi-ouverture (10; 20; 30; 40; 80) avec:
un capteur d'images (12);
un réseau (14) de canaux optiques (16a à d), où chaque canal optique (16a à d) comporte une optique individuelle par canal (64a à d) destinée à reproduire au moins une partie (72a à d) d'un champ de vision d'ensemble (70a à b) sur une surface de capteur d'image (24a à d) propre du capteur d'image (12);
un dispositif de déviation de faisceau (18) destiné à dévier les trajets de faisceau des canaux optiques, comportant au moins un élément de déviation de faisceau (46a à d; 46'; 46'a à b) avec une surface pouvant être commandée (29a à d) destinée à dévier un trajet de faisceau (26a à d) d'un canal optique (16a à d), où à chaque canal optique (16a à d) est associé un élément de déviation de faisceau (46a à d; 46'; 46'a à b), de sorte que les trajets de faisceau (26a à d) soient dirigés du champ de vision partiel respectif par le dispositif de déviation de faisceau (18) vers les optiques (64a à d) et de là orientés sur les surfaces de capteur d'image (24a à d);
dans lequel l'élément de déviation de faisceau (46a à d ; 46' ; 46'a à b) est conçu pour présenter, sur base d'une première commande électrique (23), un état transparent de la surface pouvant être commandée (29a à d) et pour présenter, sur base d'une deuxième commande électrique (23), un état réfléchissant de la surface pouvant être commandée (29a à d) pour dévier le trajet de faisceau (26a à d);
**caractérisé par le fait que** la surface pouvant être commandée (29a à d) est une première surface pouvant être commandée (29a), où l'élément de déviation de faisceau présente une deuxième surface pouvant être commandée (29e), lesquelles peuvent être commandées à l'état transparent et à l'état réfléchissant, où les première et deuxième surfaces pouvant être commandées (29a, 29e) sont disposées selon un angle (α) d'au moins 10° et de tout au plus 170° l'une par rapport à l'autre;
dans lequel l'élément de déviation de faisceau (46') comporte un premier, un deuxième, un troisième et un quatrième prisme (35a à d) avec une surface de base triangulaire, où est formée la première surface pouvant être commandée (29a) comportant un premier élément de surface (29ai) et un deuxième élément de surface (29a₂), dans lequel est formée la deuxième surface pouvant être commandée (29e) comportant un troisième élément de surface (29e₁) et un quatrième élément de surface (29e₂), dans lequel chacun des premier à quatrième éléments de surface (29ai, 29a₂, 29ei, 29e₂) est disposé sur une surface de prisme de l'un des premier à quatrième prismes (35a à d), et les prismes (35a à d) sont disposés de sorte que les surfaces de prisme se fassent face et les premier et deuxième éléments de surface (29ai, 29a₂) forment la première surface pouvant être commandée (29a) et les troisième et quatrième éléments de surface (29ei, 29e₂) forment la deuxième surface pouvant être commandée (29e);
dans lequel le premier élément de surface (29ai) comporte un premier empilement de couches (51a) qui crée la commutation entre l'état transparent et l'état réfléchissant, dans lequel un ordre de couches (S1 à S4) dans le premier empilement de couches (51a) est complémentaire à un ordre de couches (S1 à S4) dans un deuxième empilement de couches (51b) du deuxième élément de surface pouvant être commandée (29a₂).

2. Dispositif de reproduction multi-ouverture selon la revendication 1, dans lequel le dispositif de déviation de faisceau (18) comporte au moins un élément miroir (27), dans lequel est associé à chaque canal optique (16a à d) un élément miroir (27) qui est disposé de sorte que la surface pouvant être commandée (29) soit disposée entre l'optique (64a à d) et l'élément miroir (27) et le dispositif de déviation de faisceau (18) dévie, à l'état transparent de la surface pouvant être commandée (29a à d), le trajet de faisceau (26a à d) par l'élément miroir (27),

3. Dispositif de reproduction multi-ouverture selon la revendication 1 ou 2, dans lequel le dispositif de déviation de faisceau (18) comporte une pluralité d'éléments de déviation de faisceau (46a à d; 46'a à b) qui sont disposés dans une direction d'extension de rangée (65) du réseau, dans lequel les surfaces pouvant être commandées (29a, 29'a, 29e, 29'e) de la pluralité d'éléments de déviation de faisceau (46a à d; 46'a à b) sont disposées inclinées l'une par rapport à l'autre dans le dispositif de déviation de faisceau (18), de sorte que les canaux optiques (16a à d) soient déviés en différents champs de vision partiels (72a à d) d'un champ de vision d'ensemble commun (70).

4. Dispositif de reproduction multi-ouverture selon l'une des revendications précédentes, dans lequel le dispositif de déviation de faisceau (18) présente une pluralité d'éléments de déviation de faisceau formés de manière identique (46a à d; 46'a à b) dans une direction d'extension de rangée (65) dans laquelle sont disposés les canaux optiques (16a à d) dans le réseau (14), dans lequel la pluralité d'éléments de déviation de faisceau (46a à d; 46'a à b) sont disposés dans la direction d'extension de ligne (65) de manière tournée l'un par rapport à l'autre.

5. Dispositif de reproduction multi-ouverture selon l'une des revendications précédentes, dans lequel le champ de vision d'ensemble est un premier champ de vision d'ensemble et dans lequel une première optique (64a à d) d'un premier canal optique (16a à d) présente une première distance focale (f₁, f₂, f₃), et dans lequel une deuxième optique (64a à d) d'un deuxième canal optique (16a à d) présente une deuxième distance focale (f₁, f₂, f₃), dans lequel la première distance focale s'écarte de la deuxième distance focale d'au moins 10 % et le dispositif de reproduction multi-ouverture est conçu pour capturer, à l'aide du premier canal optique, le premier champ de vision d'ensemble et, à l'aide du deuxième canal optique, un deuxième champ de vision d'ensemble.

6. Dispositif de reproduction multi-ouverture selon la revendication 5, dans lequel un premier groupe avec au moins un canal optique (16a à d) comportant une optique (64a à d) avec la première distance focale (f₁, f₂, f₃) est configuré pour reproduire le premier champ de vision d'ensemble (70a) et dans lequel un deuxième groupe avec au moins un canal optique (16a à d) comportant une optique avec la deuxième distance focale (f₁, f₂, f₃) est configuré pour reproduire le deuxième champ de vision d'ensemble (70b).

7. Dispositif de reproduction multi-ouverture selon l'une des revendications précédentes, dans lequel l'élément de déviation de faisceau (46a à d; 46'; 46'a à b) est conçu pour procéder, à l'état transparent et à l'état réfléchissant, à une adaptation optique du canal optique (16a à d) différente l'une de l'autre;
dans lequel l'élément de déviation de faisceau (46a à d; 46'; 46'a à b) présente une première surface pouvant être commandée (29a) et une deuxième surface pouvant être commandée (29e) qui sont conçues pour procéder, dans un canal optique, à des modifications différentes qui sont différentes l'une de l'autre pour fournir, par des pouvoirs de réfraction différents, une focalisation ou défocalisation différente l'une de l'autre du canal optique (16a à d).

8. Dispositif de reproduction multi-ouverture selon l'une des revendications précédentes, comportant par ailleurs un stabilisateur d'image optique (22) agissant en commun pour un, deux, une pluralité ou tous les trajets de faisceau (26a à d) des canaux optiques (16a à d) pour la stabilisation d'image optique le long d'un premier axe d'image (28) et d'un deuxième axe d'image (32) en générant un mouvement relatif de translation entre le capteur d'image (12) et le réseau (14), dans lequel le mouvement relatif de translation se déroule de manière parallèle à un premier axe d'image (28) et à un deuxième axe d'image (32) d'une image capturée par le dispositif de reproduction multi-ouverture.

9. Dispositif de reproduction multi-ouverture selon l'une des revendications précédentes, comportant par ailleurs un stabilisateur d'image électronique (41) agissant pour un, deux, une pluralité ou tous les trajets de faisceau (26a à d) des canaux optiques (16a à d) pour la stabilisation d'image électronique le long d'un premier axe d'image (28) et d'un deuxième axe d'image (32).

10. Dispositif de reproduction multi-ouverture selon la revendication 9, dans lequel le stabilisateur d'image électronique (41) est conçu pour effectuer une stabilisation d'image de manière individuelle par canal pour chaque canal optique (16a à d).

11. Dispositif de reproduction multi-ouverture selon la revendication 10, dans lequel le stabilisateur d'image électronique (41) est conçu pour stabiliser une reproduction d'un canal optique (16a à d) par rapport à une reproduction de référence stabilisée optiquement dans un autre canal optique (16a à d).

12. Dispositif de reproduction multi-ouverture selon la revendication 9 à 11, dans lequel le stabilisateur d'image électronique (41) est conçu pour effectuer la stabilisation d'image électronique individuelle par canal dans chaque canal (16a à d) selon un rapport fonctionnel établi qui dépend d'un mouvement relatif entre le capteur d'image (12), le réseau (14) et le dispositif de déviation de faisceau (18).

13. Dispositif de reproduction multi-ouverture selon l'une des revendications précédentes, avec par ailleurs:
un moyen de focalisation (87) comportant au moins un actionneur (89a à c) destiné à régler de manière individuelle par canal un foyer du dispositif de reproduction multi-ouverture, où l'actionneur (89a à c) est conçu pour créer un mouvement relatif individuel par canal entre les optiques (64a à d) et le capteur d'image (12);
un stabilisateur d'image électronique (41) agissant pour un, deux, une pluralité ou tous les trajets de faisceau (26a à d) des canaux optiques (16a à d) pour la stabilisation d'image le long d'un premier axe d'image (28) et d'un deuxième axe d'image (32).

14. Dispositif de reproduction multi-ouverture (10; 20; 30; 40; 80) selon l'une des revendications précédentes, qui est conçu pour capturer un champ de vision d'ensemble (70) au moins partiellement de manière stéréoscopique.
